(19)

Europäisches
Patentamt
European
Patent Office
Office européen
des brevets

(11) **EP 1 621 867 B1**

(12) **EUROPEAN PATENT SPECIFICATION**

(45) Date of publication and mention
of the grant of the patent:
**07.10.2009 Bulletin 2009/41**

(51) Int Cl.:
***G01N 21/03*** *(2006.01)*

(21) Application number: **05076672.4**

(22) Date of filing: **21.07.2005**

(54) **Dense pattern optical multipass cell**

Zelle mit Mehrfachdurchgang und mit einem dichten Muster

Cellule à passages multiples avec un motif dense

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **21.07.2004 US 896608
22.09.2004 US 948660**

(43) Date of publication of application:
**01.02.2006 Bulletin 2006/05**

(73) Proprietor: **Southwest Sciences Incorporated
Santa Fe, NM 87505 (US)**

(72) Inventor: **Silver, Joel A.
Santa Fe, New Mexico 87508 (US)**

(74) Representative: **Kupecz, Arpad
Octrooibureau Los en Stigter B.V.
P.O. Box 20052
1000 HB Amsterdam (NL)**

(56) References cited:
**DE-A1- 2 906 536          DE-A1- 10 216 047
FR-A- 2 767 195           US-A- 5 550 375
US-A1- 2002 185 603**

- **MITTENZWEY K -H ET AL: "A portable
  absorption-fluorometer for detection of organic
  substances in fluids" FRESENIUS J ANAL CHEM;
  FRESENIUS' JOURNAL OF ANALYTICAL
  CHEMISTRY 1996, vol. 355, no. 5-6, 1996, pages
  742-744, XP009055223**
- **HAO LU-YUAN ET AL: "Cylindrical mirror
  multipass Lissajous system for laser
  photoacoustic spectroscopy" REVIEW OF
  SCIENTIFIC INSTRUMENTS, AMERICAN
  INSTITUTE OF PHYSICS, US, vol. 73, no. 5, May
  2002 (2002-05), pages 2079-2085, XP012040016
  ISSN: 0034-6748**
- **TRUTNA W R ET AL: "Multiple-pass Raman gain
  cell" APPLIED OPTICS, OSA, OPTICAL SOCIETY
  OF AMERICA, WASHINGTON, DC, US, vol. 19, no.
  2, 15 January 1980 (1980-01-15), pages 301-312,
  XP002321045 ISSN: 0003-6935**

**Description**

BACKGROUND OF THE INVENTION

Field of the Invention (Technical Field):

The present invention relates to creation and use of long folded optical paths in a compact structure for use with lasers in making optical measurements or systems.

Description of Related Art

Note that the following discussion refers to a number of publications by author(s) and year of publication, and that due to recent publication dates certain publications are not to be considered as prior art vis-a-vis the present invention. Discussion of such publications herein is given for more complete background and is not to be construed as an admission that such publications are prior art for patentability determination purposes.

Multiple pass optical cells with dense spot patterns are very useful for many applications, especially when the cell volume must be minimized relative to the optical path length. Present methods to achieve these dense patterns require very expensive, highly precise astigmatic mirrors and complex alignment procedures to achieve the desired pattern. This invention describes a new, much simpler and less demanding mirror system comprising inexpensive cylindrical mirrors which can meet all of the requirements and be aligned much more readily.

Multiple pass optical cells are used to achieve very long optical path lengths in a compact footprint and have been extensively used for absorption spectroscopy, (White, J. U., "Long Optical Paths of Large Aperture," J. Opt. Soc. Am., vol. 32, pp 285-288 (May 1942); Altmann, J. R. et al., "Two-mirror multipass absorption cell," Appl. Opt, vol. 20 , No. 6, pp 995-999 (15 Mar. 1981)), laser delay lines (Herriott, D. R., et al., "Folded Optical Delay Lines," Appl. Opt., vol. 4, No. 8, pp 883-889 (Aug. 1965)), Raman gain cells (Trutna, W. R., et al., "Multiple-pass Raman gain cell," Appl. Opt., vol. 19, No. 2, pp 301-312 (15 Jan. 1980)), interferometers (Herriott, D. H., et al., "Off-Axis Paths in Spherical Mirror Interferometers," Appl. Opt., vol. 3, No. 4, pp 523-526 (April 1964)), photoacoustic spectroscopy (Sigrist M.W., et al., "Laser spectroscopic sensing of air pollutants," Proc. SPIE, vol. 4063, pp. 17 (2000)) and other resonators (Yariv, A., "The Propagation of Rays and Spherical Waves," from Introduction to Optical Electronics, Holt, Reinhart, and Winston, Inc., New York (1971), Chap. 2, pp 18-29; Salour, M. M., "Multipass optical cavities for laser spectroscopy," Laser Focus. 50-55 (Oct. 1977)).

These cells have taken the form of White cells (White, J. U., "Long Optical Paths of Large Aperture," J. Opt. Soc. Am., vol. 32, pp 285-288 (May 1942)), integrating spheres (Abdullin, R. M. et al., "Use of an integrating sphere as a multiple pass optical cell," Sov. J. Opt. Technol., vol. 55, No. 3, pp 139-141 (Mar. 1988)), and stable resonator cavities (Yariv, A., "The Propagation of Rays and Spherical Waves," from Introduction to Optical Electronics, Holt, Reinhart, and Winston, Inc., New York (1971)).

The stable resonator is typified by the design of Herriott (Herriott, D. H., et al., "Off-Axis Paths in Spherical Mirror Interferometers," Appl. Opt., vol. 3, No. 4, pp 523-526 (April 1964)). The simplest such Herriott cell consists of two spherical mirrors of equal focal lengths separated by a distance d less than or equal to four times the focal lengths $f$ of the mirrors. This corresponds to stable resonator conditions. A collimated or focused laser beam is injected through the center of a hole in one of the mirrors, typically an off-axis location near the mirror edge. The beam is periodically reflected and refocused between these mirrors and then exits through the center of the input hole (defining the re-entrant condition) after a designated number of passes N, in a direction (slope) that is different from the entry slope. As a result, the total optical path traversed in the cell is approximately N x d. The pattern of reflected spots observed on the mirrors in these cells forms an ellipse. Re-entrant conditions for spherical mirror Herriott cells are restricted by certain predetermined ratios of the mirror separation d to the focal length f and the location and slope of the input beam. For any re-entrant number of passes N, all allowed solutions are characterized by a single integer M. Excellent descriptions for the design, setup and use of these cells are given by Altmann (Altmann, J. R., et al., "Two-mirror multipass absorption cell," Appl. Opt., vol. 20 , No. 6, pp 995-999 (15 Mar. 1981)) and McManus (McManus, J. B., et al., "Narrow optical interference fringes for certain setup conditions in multipass absorption cells of the Herriott type," Appl. Opt., vol. 29, No. 7, pp 898-900 (1 Mar. 1990)).

When the cell volume must be minimized relative to the optical path length or where a very long optical path (> 50 m) is desired, it is useful to increase the density of passes per unit volume of cell. The conventional spherical mirror Herriott cell is limited by the number of spots one can fit along the path of the ellipse without the spot adjacent to the output hole being clipped by or exiting that hole at a pass number less than N. This approximately restricts the total number of passes to the circumference of the ellipse divided by the hole diameter, which in turn is limited by the laser beam diameter. For a 25-mm radius mirror with a relatively small 2-mm diameter input hole located 20 mm from the center of the mirror, a maximum of about ($\pi$ x2x20)/2 = 60 spots, or 120 passes is possible at best. Generally the hole is made larger to prevent any clipping of the laser input beam that might lead to undesirable interference fringes, and typical spherical Herriott cells employ less than 60 passes.

Herriott (Herriott, D. R. and Schulte, H. J., "Folded Optical Delay Lines," Appl. Opt., vol. 4, No. 8, pp 883-889 (Aug. 1965)) demonstrated that the use of astigmatic mirrors could greatly increase the spot density, and hence optical path length, in the cell. Each mirror has different finite focal lengths ($f_x$ and $f_y$) along orthogonal x and y axes, and the mirrors are aligned with the same focal lengths parallel to one another. The resulting spots of each reflection on the mirrors create precessions of ellipses to form Lissajous patterns. Since these patterns are distributed about the entire face of each mirror, many more spots can be accommodated as compared to a cell with spherical mirrors. Herriott defines the method of creating the astigmatic mirror is to distort a spherical mirror, either in manufacture or in use, by squeezing a spherical mirror in its mount. He states that the amount of astigmatism required is very small and amounts to only a few wavelengths. McManus (McManus, et al., "Astigmatic mirror multipass absorption cells for long-path-length spectroscopy," Appl. Opt., vol. 34, No. 18, pp 3336-3348 (20 June 1995)) outlines the theory and behavior of this astigmatic Herriott cell and shows that the density of passes can be increased by factors of three or more over spherical mirror cells. For these astigmatic mirror cells, light is injected through a hole in the center of the input mirror. Allowed solutions for re-entrant configurations are characterized by a pair of integer indices $M_x$ and $M_y$, since there are now two focal lengths present along orthogonal axes.

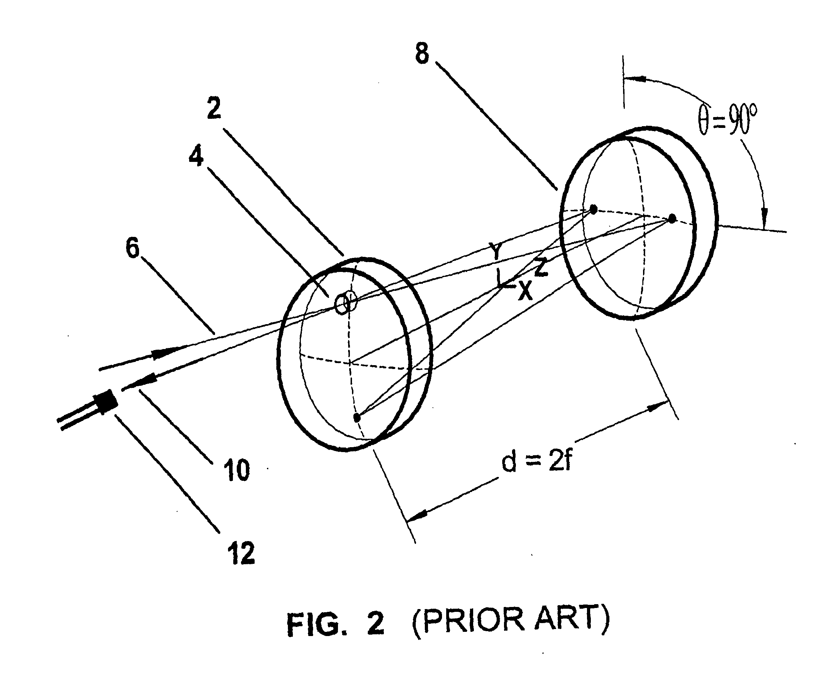

The drawback of this design is that the constraints to achieve useful operation are very severe. First of all, both $M_x$ and $M_y$ must simultaneously be re-entrant, so that for a desired N and variable distance d, the focal lengths $f_x$ and $f_y$, must be specified to a tolerance of 1 part in $10^4$. Since mirrors can rarely be manufactured to such tolerances, this cell as originally proposed is impractical for routine use. However, Kebabian (U.S. Pat. No. 5,291,265 (1994)) devised a method to make the astigmatic cell usable. Starting with the astigmatic Herriott setup with the same mirror axes aligned, he then rotates one mirror around the z-axis (FIG. 2), thereby mixing the (previously independent) x and y components of the beam co-ordinates. A moderate rotation of ~5-20 degrees and a small compensating adjustment of the mirror separation distance can accommodate the imprecision in the manufacturing of the mirror focal lengths. However, this approach is still difficult to achieve in practice and requires complex calculations and skill to get to the desired pattern. Furthermore, the astigmatic mirrors must still be custom made and cost many thousands of dollars for a single pair.

Recently, Hao (Hao, L.-Y., et. al., "Cylindrical mirror multipass Lissajous system for laser photoacoustic spectroscopy," Rev. Sci. Instrum., vol. 73, No. 5, pp. 2079-2085 (May 2002)) described another way to generate dense Lissajous patterns using a pair of cylindrical mirrors, each having a different focal length, and where the principal axes of the mirrors are always orthogonal to one another. In essence, this creates a pair of mirrors whose x-axis comprises one curved surface (mirror A) of focal length $f_x$ and one flat mirror surface (mirror B), and in the y-axis comprises one flat mirror surface (on mirror A) and one curved surface of focal length $f_y$ (mirror B), where $f_x \neq f_y$. Formulas to predict the spot patterns on each mirror are provided. The advantage to this system is that the dense Lissajous patterns can be formed from a pair of inexpensive mirrors, in contrast to the requirement for custom astigmatic mirrors (we note that for a practical commercial multipass cell, one cannot rely on simply squeezing spherical mirrors to achieve a reliable long term, stable set of focal lengths. Thus diamond turned custom astigmatic mirrors must be made). The drawback of this mismatched focal length pair of cylindrical mirrors is that, similar to the astigmatic Herriott cell, for a given pair of focal lengths, there is only one allowed re-entrant solution value of N permitted. Of course, for photoacoustic measurements as intended by Hao, where any exiting light is not detected, the light does not necessarily have to be re-entrant and many values of mirror separation which are not re-entrant, but do generate many passes, are useful.

The present invention describes a simple, low cost and more easily aligned high density multipass optical cell, where many different paths can be achieved with the same set of mirrors. The key to this invention is the use of cylindrical mirrors with nominally equal focal lengths crossed at angles other than any of approximately 0,90,480,270 degrees. When two cylindrical mirrors are aligned such that the curved axes are crossed at 90 degrees (orthogonal condition), they generate spot patterns similar to a spherical Herriott cell, except that the stable resonator conditions restrict the allowed separations to $0 < d \leq 2f$. If the entry point of the laser beam is off the central axis, elliptical spot patterns similar to a spherical cell are generated; if the beam enters through the center of one mirror, then lines instead of ellipses form and different re-entry restrictions apply. When crossed at angles other than any of approximately 0,90,480,270 degrees the cell provides a dense pattern of spots on said mirrors.

The present invention has also determined that, by rotating the cylindrical mirrors to angles δ other than 90 degrees, the previously elliptical or linear spot patterns degenerate into dense Lissajous patterns of spots that generally fill a rectangularly-spaced region of each mirror. Without complex alignment procedures, and starting from a predetermined 90 degree crossed pattern, one can readily generate predicted dense patterns and much longer optical path lengths by twisting either mirror over the unrestricted range of rotation angle δ. This works for both off-axis and central axis input holes and almost any value of N can be achieved within the stability constraints for d and at almost any rotation. Unlike the astigmatic cell or mismatched cylindrical cell, achieving alignment of these spot patterns does not rely on the absolute manufactured focal lengths, but only on the easily adjusted ratio d/f and relative twist angle of the two cylindrical axis planes.

The present disclosure also describes a very simple, low cost, high density, multipass optical cell, where no rotation of the mirrors is needed (in fact, with a spherical-cylindrical mirror pair, no rotation axis can be defined because the spherical mirror is fully symmetric). The key to this disclosure is to use near, but not exact re-entrant conditions as are common to all of the above-referenced methods. Contrary to the teachings of all multipass mirror papers and patents, exact re-entry is not a necessary criterion for practical use, but does simplify use in most cases. However, with the spherical-cylindrical mirror pair, there are very few or no exact re-entrant solutions (depending on the focal lengths of the mirrors) but only a limited, but useful, number of nearly re-entrant solutions exist. Thus it becomes a relatively easy task to identify good near re-entrant solutions and to align any given mirror system to achieve these solutions. As long as this mirror system is a stable resonator, then the desired number of passes can be achieved simply by setting d to the predicted value based on the mirror focal lengths. When the laser beam enters through the center of one mirror, a dense pattern of spots forms and the position of the beam as it exits this hole is readily predicted. Unlike all other dense cell methods, this invention does not rely on the absolute manufactured focal lengths but on the relative mirror separation ratio d/$f$.

BRIEF SUMMARY OF THE INVENTION

The present invention is of a multiple pass optical cell according to the appended claims.

The invention is also of a multiple pass optical cell method according to the appended claims.

A primary object of the present invention is to generate a very long optical path in a compact cell.

Another object of the invention is to keep the cost of this cell low so as to permit widespread commercial availability and feasibility.

Another object of this invention is to make a dense multipass cell where one set of mirrors permits a wide range of configurations having many different numbers of allowed passes.

Another object of this invention is to make alignment of the desired number of optical passes easier, quicker and more reliable to accomplish.

Another objective is to permit a long optical path laser feedback configuration.

A primary advantage of the present invention is that it can be used in a wide variety of optical applications and can be constructed at significantly lower cost as compared with other dense pattern optical designs.

A primary object of the present invention is to generate a very long optical path in a compact cell.

Another object of the invention is to keep the cost of this cell low so as to permit widespread commercial availability and feasibility.

Another object of this invention is to make a dense multipass cell where one set of mirrors permits a wide range of configurations having many different numbers of allowed passes.

Another object of this invention is to make alignment of the desired number of optical passes easier, quicker and more reliable to accomplish.

A primary advantage of the present invention is that is can be used in a wide variety of optical apprrcations and can be constructed at significantly lower cost as compared with other dense pattern optical designs.

Other objects, advantages and novel features, and further scope of applicability of the present invention will be set forth in part in the detailed description to follow, taken in conjunction with the accompanying drawings, and in part will become apparent to those skilled in the art upon examination of the Mowing, or may be learned by practice of the invention. The objects and advantages of the invention may be realized and attained by means of the instrumentalities and combinations particularly pointed out in the appended claims.

BRIEF DESCRIPTION OF THE SEVERAL VIEWS OF THE DRAWINGS

The accompanying drawings, which are incorporated into and form a part of the specification, illustrate one or more embodiments of the present invention and, together with the description, serve to explain the principles of the invention. The drawings are only for the purpose of illustrating one or more preferred embodiments of the invention and are not to be construed as limiting the invention. In the drawings:

FIG. 1 is a drawing of the preferred embodiment of the present invention.

FIG. 2 is a drawing of a conventional spherical mirror Herriott cell.

FIG. 3 is a plot of the patterns of allowed re-entrant passes for a spherical mirror Herriott cell as a function of dimensionless mirror separation d/2$f$. The transmitted intensity is equal to $R^N$, where R is the reflectivity of the mirrors (0.98 here) and N the total number of passes through the cell.

FIG. 4 is a drawing of the cylindrical mirror cell of the invention having a center on-axis input hole.

FIG. 5 is a plot of the patterns of allowed re-entrant passes for a cylindrical mirror cell as a function of dimensionless mirror separation d/2$f$, with the mirror axes at 90 degrees and an off-axis input hole. The transmitted intensity is equal to $R^N$, where R is the reflectivity of the mirrors (0.98 here) and N the total number of passes through the cell.

FIG. 6 is a map of the number of allowed re-entrant passes as a function of dimensionless mirror separation d/$f$ and mirror twist angle δ. The magnitude of N is denoted (logarithmically) by the diameter of each spot. The largest spot corresponds to 4 passes and the smallest to 250 passes.

FIG. 7 is a spot pattern computed and observed for 26 passes with a 90 degree crossed cylindrical mirror cell at dimensionless separation 0.88.

FIG. 8 is a dense spot pattern computed and observed by taking the mirror configuration from FIG. 7 and rotating one mirror by 9 degrees to achieve 122 passes.

FIG. 9 is a map of the number of allowed re-entrant passes as a function of dimensionless mirror separations d/$f$ near 1.1 and mirror twist angles δ near 98 degrees. Selected spots are darker and denoted by the indices $N\,{}^{M_x}_{M_y}$.

FIG. 10 is a plot of a 174 pass dense spot pattern computed and observed at d/2$f$ =1.13 and mirror twist angles δ = 98.3 degrees.

## DETAILED DESCRIPTION OF THE INVENTION

The present invention describes a simple, low cost and more easily aligned high density multipass optical cell, where many different paths can be achieved with one set of mirrors. The key to this invention is the use of cylindrical mirrors with nominally equal focal lengths crossed at angles other than any of approximately 0,90,480,270 degrees. When two cylindrical mirrors are aligned such that the curved axes are crossed at 90 degrees, they generate spot patterns similar to a spherical Herriott cell, except that the stable resonator conditions restrict the allowed separations to 0 < d ≤ 2$f$. If the entry point of the laser beam is off the central axis, elliptical spot patterns similar to a spherical cell are generated; if the beam enters through the center of one mirror, then lines instead of ellipses form and different re-entry restrictions apply. This mirror is also useful where non re-entry, and long paths are required. When crossed at angles other than any of approximately 0,90,180, 270 degrees the cell provides a dense pattern of spots on said mirrors. For purposes of the specification and claims, a "cylindrical mirror" is one for which one radius of $r_x$ and $r_y$ is substantially infinite, the non-infinite axis being known as the "curved axis". This is in contradistinction to a "flat mirror", for which both radii are substantially infinite, and a "spherical mirror" for which both radii are non-infinite and substantially equal. An "astigmatic mirror" is a mirror for which both radii are non-infinite but not equal, usually deviating slightly from one another by design.

The present invention comprises rotating the cylindrical mirrors to angles other than 90 degrees, such that the previously elliptical or linear spot patterns degenerate into dense Lissajous patterns of spots that generally fill a rectangularly-spaced region of each mirror. Without complex alignment procedures, and starting from a 90 degrees crossed pattern, one can readily generate known dense patterns and much longer optical path lengths by twisting either mirror over the full range of rotation angles δ. This works for both off-axis and central axis input holes and almost any value of N can be achieved within the stability constraints for d and at almost any rotation. Specific re-entrant conditions have been identified and are easily set by various combinations of mirror separation and angle between the plane of the curved axis of each mirror.

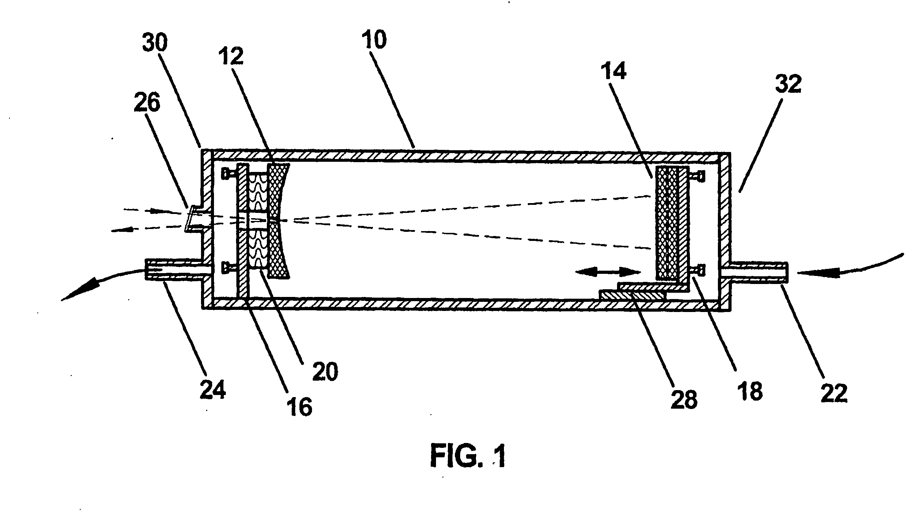

FIG. 1 is a drawing of the preferred embodiment for the present invention. The cylindrical mirrors **12** and **14** are attached to adjustable-tilt mirrors mounts **16** and **18,** respectively, which are attached to an open frame or closed cell **10** separated by distance d. In this example, one of the mirror mounts is attached to a means 28 to permit variable adjustment of the mirror separation. Mirror **12** is first attached to a rotation mount **20** along the central axis of the cell so as to so as to be able to rotate this mirror over the full 2π angular range around the central axis relative to the other mirror **14**. A light source or laser is pointed into the cell at the appropriate direction (slope) and a detector mounted outside the cell collects the light after transmission through the multiple pass optics. In the case of a closed cell, the gas is input at one end **22** and pumped out through a second port **24** at the other end. In this case sealed end flanges **32** and **30** are attached to the cell wall. A window **18** is used to permit the light to enter and exit the sealed cell so that no ambient gas can interfere with the gas sample inside the cell.

This description begins with a discussion of the prior art spherical Herriott cell theory and then briefly describes the prior art astigmatic cell design and restrictions to provide a basis for the new cylindrical cell invention.

As generally set up (FIG. 2), the normal Herriott cell comprises one spherical mirror ("front") **2** of focal length $f$ with an off-axis entrance hole **4** (at co-ordinates $x_0$ and $y_0$) through which the laser beam **6** is injected with slopes $x_o'$ and $y_o'$ and pointed at a second spherical mirror **8** ("rear"), also of focal length $f$. This beam is then periodically reflected and refocused such that the beam eventually exits **10** through the input hole **4** (re-entrant condition) but in the opposite direction (slope) of the input beam so as to make possible the placement of a detector **12** without obstructing the input beam. The conditions for re-entry and the number of passes in the cell (even integer N) are governed by the focal lengths of the mirrors $f$, their separation d and the initial slopes of the input beam ($x_0'$ and $y_0'$) relative to the ratio of d/$f$. The total optical path within the cell is approximately d $\times$ N. The patterns of spots on the mirrors trace out an ellipse, where the co-ordinates of the spots of the $i^{th}$ pass are:

$$x_I = x_0 \cos(i\theta) + \sqrt{\frac{d}{4f - d}} \, (x_0 + 2fx_0') \sin(i\theta), \tag{1}$$

with a corresponding equation for y. Thus $x_i$ is the projection of the maximum excursion of the x coordinate of any spot (i.e., $x_{max}$) on either mirror. This position changes on each pass with an incremental increase i in the angle $\theta$. For the off-axis injection of the laser beam as shown in FIG. 2, the light will exit the cell after an integral number of $2\pi$ multiples of $\theta$, so that

$$\theta_R = 2\pi M / N \text{ and}$$
$$d = 2f(1 - \cos\theta_R), \tag{2}$$

where the number of complete orbits of spots before exiting is denoted by the integer index M; $\theta_R$ is the angular projection advance angle for each sequential pass. Thus after N passes, the spot pattern has rotated a multiple of $2\pi$ in both x and y co-ordinates and exits through the input hole. While many possible solutions for N and M exist for any given set of input conditions, the generally used initial conditions (with the off-axis input hole defined as $x_0 = 0$, $y_0 = 1$) is to align the first pass at $x_1 = 1$, $y_1 = 0$ (i.e., input slopes corresponding to $x_0' = 1$, $y_0' = -1$ in reduced units of d/2$f$). This condition generates a circle with N = 4 at d = 2$f$. This is illustrated in FIG. 2. Under these conditions, all patterns can be characterized by:

$$N = 4M \pm K, \tag{3}$$

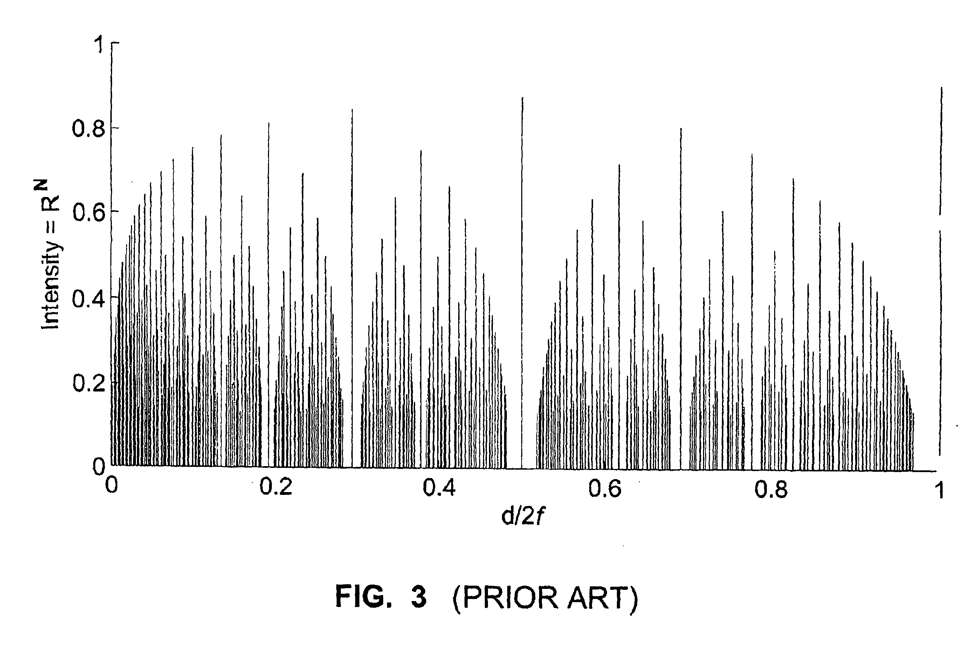

where K is an even integer, and positive K correspond to solutions of d < 2$f$ and negative K to solutions for d > 2$f$ (up to a maximum allowed separation of 4$f$). In general, -K solutions are not as useful since the beam patterns trend toward being much larger in size than the input hole position as the mirror separation increases beyond 2$f$. While many different (M, N) pairs can generate the same fraction (angular advance 8) in Eqn. 2, only the set with the lowest N is allowed. All other sets cannot be achieved since the pattern will exit at a pass number less than N. For example, M = 2, N = 10 gives a fraction of 1/5 and $\theta$ = 0.4$\pi$. Since M = 4 and N = 20 also gives a fraction of 1/5, this 20-pass configuration can't be achieved because the beam would exit after the tenth pass. As further elaborated by McManus, these rules can be formalized by computing modulo orders of the corresponding K values for any N (McManus, J. B. and Kebabian, P.L., "Narrow optical interference fringes for certain setup conditions in multipass absorption cells of the Herriott type," Appl. Opt., vol. 29, No. 7, pp 898-900 (1 Mar. 1990). FIG. 3 illustrates the pattern of allowed solutions for the spherical Herriott cell as a function of the ratio d/2$f$. For d > 2$f$, the pattern is just a mirror image reflected about d = 2$f$. The relative intensity of the light exiting the cell is related to N by $R^N$, where R = 0.98 is the mirror reflectivity in this calculation. The patterns of allowed passes correspond to various families of {N, M, K}.

The useful properties of the spherical Herriott cell are that virtually any desired optical path length and number of passes can be achieved by simply adjusting the mirror separation distance. The output spot position and slope are fixed regardless of the spot pattern or number of passes, and that this output is invariant to slight tilt or misalignment of the mirrors. Thus once the initial beam is aligned and the detector located, the number of passes and path length are readily adjusted by simply moving the position of the rear mirror along the axis.

High Density Cells

In order to achieve a higher density of spots, which leads to longer paths lengths for the same sized cell, Herriott developed a multipass optical cell using a pair of matched astigmatic mirrors (Herriott, D. R. and Schulte, H. J., "Folded Optical Delay Lines," Appl. Opt., vol. 4, No. 8, pp 883-889 (Aug. 1965)). Each mirror has a different finite focal length along its orthogonal x and y axes, $f_x$ and $f_y$. Thus unlike the spherical cell, the astigmatic cell x and y co-ordinates have separate, independent solutions. With the input hole now in the center of the mirror, the x and y co-ordinates for the $i^{th}$ spot are defined by:

$$\begin{aligned} x_i &= X_{max} \sin(i\theta_x), \\ y_i &= Y_{max} \sin(i\theta_y), \\ \theta_x &= \cos^{-1}(1 - d/2f_x), \text{ and} \\ \theta_y &= \cos^{-1}(1 - d/2f_y), \end{aligned} \qquad (4)$$

where $X_{max}$ and $Y_{max}$ are the maximum positions of x and y in the spot pattern. The re-entrant solutions for $M_x$ and $M_y$ are slightly different than in Eqn. (2),

$$\begin{aligned} \theta_{xR} &= \pi M_x / N, \text{ and} \\ \theta_{yR} &= \pi M_y / N, \end{aligned} \qquad (5)$$

because the beam can exit after only $\pi$ radians, rather than a full $2\pi$ when the input hole is at the edge of the pattern. M here can be viewed as the number of half-orbits of spots before each co-ordinate exits. As a result, the allowed indices are now defined here by:

$$N = 2M_x + K_x = 2M_y + K_y. \qquad (6)$$

Thus, to achieve re-entrant conditions, two simultaneous equations must be solved for a desired set of [N, $M_x$, $M_y$]. This results in specific design values for d, $f_x$ and $f_y$, making the system much less flexible for being able to select N given a particular set of mirrors. This is in contrast to the normal spherical Herriott cell where the ratio of d/$f$ can be adjusted to give a range of thetas, and thus a series of many differing re-entrant spot patterns for a given mirror pair. Since both half and full orbits of the spot patterns can be re-entrant, the beam can exit into any quadrant of x-y space. Optimal solutions can be found where the beam exits in a plane opposite the input beam onto a unique, fixed position, where patterns minimize spots near the input hole and where common factors (lower order exits at passes < N) are avoided. These solutions have been determined to require that N/2 be an odd integer and $M_x$ and $M_y$ be even integers.

In order to achieve a re-entrant design, manufacturing criteria on the precision for d, $f_x$ and $f_y$ are so severe that a commercially produced cell is almost impossible to make reliably and repeatedly. The focal lengths must be precise to better than 1 part in $10^4$ . Kebabian (U.S. Pat. No. 5,291,265 (1994)) devised a method to make the astigmatic cell usable by rotating the axis of one astigmatic mirror relative to the other and thereby mixing the (previously independent) x and y components of the beam co-ordinates. A moderate rotation of -5-20 degrees and a small compensating adjustment of the mirror separation distance can accommodate the imprecision in the manufacturing of the mirror focal lengths. However, this approach is still difficult to achieve in practice and requires complex calculations and skill to get to the desired pattern. Furthermore, the astigmatic mirrors must be custom made and cost many thousands of dollars for a single pair.

Numerical Determination of Spot Patterns

In all of these Herriott-style systems, the precise patterns of spot locations can be computed either directly from matrix multiplication methods or from analytic solutions of the relevant ray tracing equations derived from these matrices.

Using ray matrix theory as outlined by Yariv (Yariv, A., "The Propagation of Rays and Spherical Waves," from Introduction to Optical Electronics, Holt, Reinhart, and Winston, Inc., New York (1971), Chap. 2, pp 18-29), the propagation of light rays through an optical system is readily understood. Given the $x_0$ and $y_0$ components and respective slopes $x_0'$ and $y_0'$ of the incident ray, the positions and slopes after each action (translation, reflection, etc.) are:

$$r_{i+1} = \begin{bmatrix} x_{i+1} \\ x'_{i+1} \\ y_{i+1} \\ y'_{i+1} \end{bmatrix} = \mathbf{M} \cdot r_i = \begin{bmatrix} 4 \times 4 \end{bmatrix} \begin{bmatrix} x_i \\ x'_i \\ y_i \\ y'_i \end{bmatrix},$$

(7)

where the $(i+1)^{th}$ vector r is related to the previous pass i by a square matrix M that represents coefficients that perform the specified optical operation. For the specific case of two mirrors, we can find the position and slopes of the ray after one round-trip of the cell, denoted by index n, as the product of $R_1 \cdot D \cdot R_2 \cdot D \equiv C$, where R is a reflection matrix, D a translation matrix and the subscripts 1 and 2 correspond to each of the two mirrors. For n round trips, then we can express $r_n = C^n \cdot r_o$.

If the x and y components are uncoupled, then we can use separate 2×2 matrices for each x and y component. Thus the four elements of the solution C can be expressed as:

$$C = \begin{bmatrix} A & B \\ C & D \end{bmatrix},$$

(8)

The relevant matrices for translation and reflection, where f is the focal length (radius of curvature/2) along the specified component axis and d the separation, are:

$$D = \begin{bmatrix} 1 & d \\ 0 & 1 \end{bmatrix} \text{ and } R = \begin{bmatrix} 1 & 0 \\ -1/f & 1 \end{bmatrix}$$

(9)

From the equations above, C can be computed using matrix multiplication and the resulting elements of C used to derive a recursive solution for each 2x2 operation for x (or similarly y) as:

$$x_{n+2} - 2bx_{n+1} + \gamma x_n = 0,$$
$$\text{where } b = \frac{1}{2}(A + D)$$
$$\text{and } \gamma = AD - BC = 1.$$

(10)

It can also be shown that b = cos(2θ), where 2θ is twice the advance angle defined in Eqn. 1, since this formulation is describing a round-trip of two sequential passes. The stability criterion for θ to be real also creates the restriction |b| ≤ 1. The angle theta is the centroid of revolution of the x or y component.

For the prior art astigmatic Herriott cell (without rotation of the mirrors), there are different solutions for $\theta_x$ and $\theta_y$, so that re-entrant solutions must satisfy two simultaneous equations.

If the principal axis of a non-spherical mirror is not aligned with x or y, but twisted by an angle δ, then a 4×4 matrix must be used to include cross-terms (coupling of x and y) and the rotation matrix for this situation is defined by R' = T(-δ)-R-T(δ),

$$T(\delta) = \begin{bmatrix} \cos\delta & 0 & \sin\delta & 0 \\ 0 & \cos\delta & 0 & \sin\delta \\ -\sin\delta & 0 & \cos\delta & 0 \\ 0 & -\sin\delta & 0 & \cos\delta \end{bmatrix}.$$

(11)

This rotated reflection matrix and its corresponding 4×4 translation matrix must be used when either mirror is rotated away from an orthogonal axis. Note that this matrix approach is general in nature and can be used for any two-mirror system.

Analytic Formulation

From the formulations presented above, generalized analytic solutions similar to Eqn. 10 can be derived for rotated mirror systems, where the positions of each spot for the $n^{th}$ round-trip are given by a recursion formula. Unfortunately, these are very complicated algebraic expressions and the matrix formulation for these systems is preferred.

Detailed Solutions for a Cylindrical Mirror System

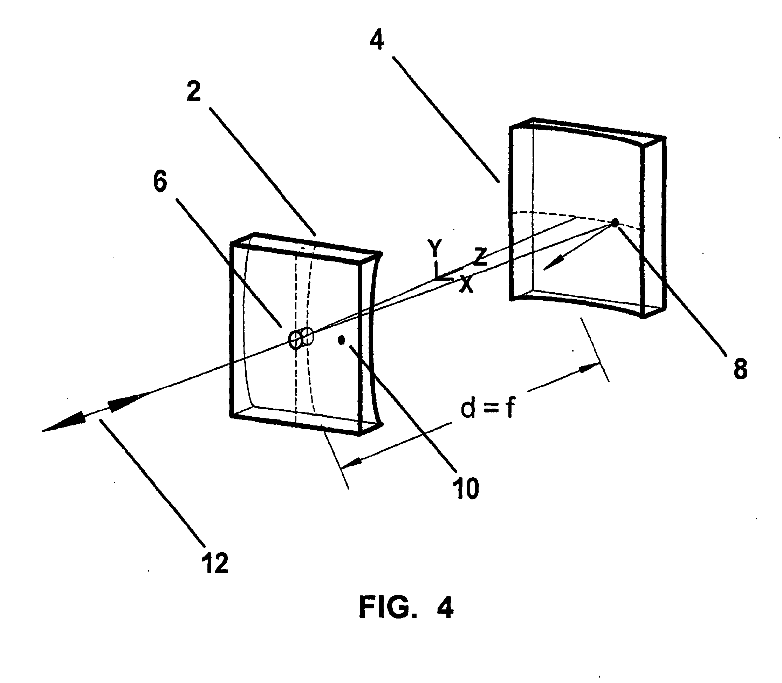

Turning now to the present invention, define a cylindrical mirror cell (FIG. 4) as having a pair of cylindrical mirrors **2** and **4**, each of which has a single finite focal length *f* in the arbitrarily defined x-z plane and is flat in the y-z plane. Define the starting point for this system with the two mirrors twisted at a relative angle of 90 degrees, so that the front mirror has curvature along the y axis and the rear mirror is curved along the x axis. Obviously this system will also work if x and y were reversed.

Since the curvatures of the two mirrors are orthogonal, this 90 degree crossed cylindrical system can be represented by 2x2 matrices using Eqn. 9 where the x-coordinate $R_1$ uses 0 and $R_2$ uses 1/f for the inverse focal lengths, and for the y-coordinate $R_1$ uses 1/f and $R_2$ uses 0. We note that if the cylinders were aligned, the beams would always walk off the edge along the flat mirror dimension. Solving for b and y in Eqn. 10, the formulas for re-entrant theta (single pass) and the stability criteria as discussed earlier become:

$$d = 2f(1 - \cos^2 \theta_R), \text{ and}$$
$$0 \le d \le 2f. \tag{12}$$

Valid solutions can be characterized as N = 8M + K for this system where $\theta_R$ is equal to $\pi M/N$ for an on-axis input hole (linear patterns) and $2\pi M/N$ for off-axis entry (elliptical patterns). As with the normal spherical mirror cell, additional restrictions on allowed values of K exist to avoid common factors upon re-entry. The additional restriction for a center (on-axis) hole is that N/2 must be odd.

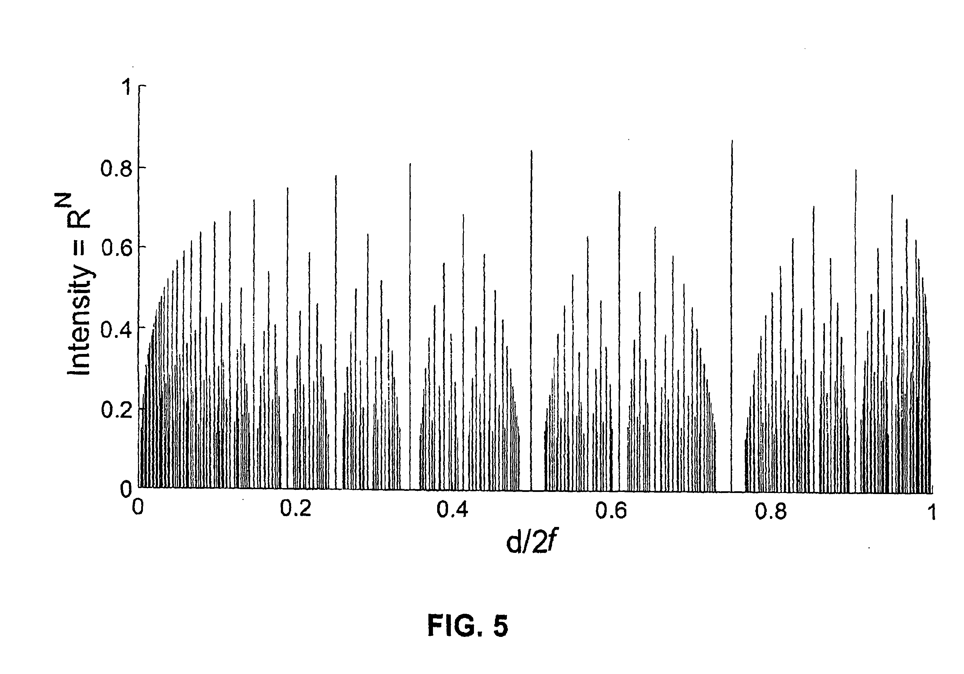

In all prior uses of spherical and astigmatic Herriott cells, for optimal results the light was injected through the input mirrors with normalized slopes $x_0' = \pm 1$, $y_o' = \pm 1$ for on-axis systems ($x_0 = 0$, $y_0 = 0$) and $x_0' = \pm 1$, $y_0' = -1$ for off-axis cells (relative to $x_0 = 0$, $y_0 = 1$). However for cylindrical mirror cells, we find more a useful input slope condition to be $x_0' = \pm 1$, $y_0' = 0$ for both on- and off-axis systems, relative to the input configurations presented. These create the widest dispersion and greatest symmetry of spot patterns. FIG. 5 shows the allowed patterns of spots for a cylindrical mirror cell at 90 degrees with an off-axis hole. Again, the relative intensity of the light exiting the cell is related to N by $R^N$, where R = 0.98 is the mirror reflectivity in this calculation. Notice that the allowed patterns of N are similar, but not identical, to those of the spherical cell.

If one of the mirrors is now rotated away from 90 degrees to get dense patterns, the 4×4 matrix or the more detailed analytic solutions are required to predict and compute spot patterns and re-entrant conditions. For two cylindrical mirrors of equal focal lengths, it is useful to describe the reentrant angles as a function of the input parameters.

$$\cos(2\theta_{xR}) = \frac{1}{2}(F - \xi), \text{ and}$$

$$\cos(2\theta_{yR}) = \frac{1}{2}(G - \xi),$$

where

$$F = 2\left[\left(\frac{d}{f}\cos^2\tau - 1\right)^2\right] - \left(\frac{d}{f}\right)^2\cos^2\tau,$$

$$G = 2\left[\left(\frac{d}{f}\sin^2\tau - 1\right)^2\right] - \left(\frac{d}{f}\right)^2\sin^2\tau,$$

$$\xi = \frac{1}{2}\left\{(G - F)\left[-1 + \sqrt{1 - \frac{4\varepsilon^2}{(G - F)^2}}\right]\right\}, \text{ and}$$

$$\varepsilon = -\left(\frac{d}{2f}\right)^2\sin(4\tau) \text{ and } \tau = \delta/2. \tag{13}$$

Given a set of mirrors with focal lengths $f$ and a desired set of advance angles $\theta_x$, $\theta y$ (*i.e.*, given $M_x$, $M_y$ and N), one can solve these equations to determine the necessary mirror separation d and twist angle $\delta$ needed to achieve this pattern. Note that all solutions depend only on the ratio of d/$f$, not on the absolute value of the focal length as for an astigmatic or unequal cylindrical cell.

Using reduced co-ordinates for mirror separation ($z \equiv d/f$), one can compute plots of spot patterns on each mirror for any values of d and $\delta$. Examination of these patterns in terms of input conditions, exit slopes, overlapping spot patterns, etc. allow us to characterize this matched cylindrical system as follows. In the discussion that follows, we assume that the input ("front") mirror will be rotated away from the orthogonal axes (having a central input hole), that the curvature on this mirror is in the y-z plane and that the curvature on the rear mirror is in the x-z plane. Exchanging the x and y curvatures for these mirrors, or having the rear mirror rotate does not affect the behavior or solutions, only the particular intermediate spot positions, which can be readily calculated for any configuration using the matrix formulation.

Center Input Hole Solutions

For a central input hole, any input slopes that keep the pattern on the mirrors is useful. However, we find that the optimal input slope for both cases for a cylindrical mirror pair is one where the first pass spot position is $x_1 = \pm 1$ and $y_1 = 0$ (given $x_0' = \pm 1$, $y_0' = 0$ ). In practice, this means that the first spot (N = 1) is pointed to a co-ordinate position of just less than half the mirror radius at a mirror separation of d = $f$. Under these conditions, the mirror areas are most efficiently filled to allow the highest density of spots and patterns are more square.

There are re-entrant solutions for all integer values of $M_x$ and $M_y$. N is even since we only consider here solutions with one mirror hole. However, not all allowed solutions are equally useful, and there are three categories for $M_x$, $M_y$ pairs.

First, the most useful case is where both $M_x$ and $M_y$ are even integers. In this case the beam always exits as the mirror image of the input beam relative to the input plane. For example, if the input beam position some distance behind the front input mirror hole is at co-ordinates $x_{in}$, $y_{in}$, then the output beam at the same distance from the mirror will be found at -$x_{in}$,-$y_{in}$. Also, the output spot is essentially invariant to minor misadjustments to the mirror tilt alignment for this case, similar to the behavior for spherical Herriott cells with this re-entrant behavior (equal coefficients along the diagonal of the transfer matrix $C_{N/2}$). Within this case, we also find that the N/2 spot always lies at the mirror center ($x_{N/2}$ = 0, $y_{N/2}$ = 0). For N/2 = even, the (N/2)th spot always lies on the front mirror and would exit early on this pass, rather than on the Nth pass; thus these patterns of N are not allowed. However, for N/2 = odd, the N/2th spot will always be found at the rear mirror center position. This is very useful for recognizing when a valid re-entrant pattern is achieved.

Second, if $M_x$ and $M_y$ are both odd numbers, then the re-entrant output beam always exits back along the exact input beam path and will travel back to the light source. While not useful for absorption measurements, this may be very useful for applications where a long optical feedback path returning to the laser source is desired.

The final case occurs when $M_x$ is even and $M_y$ is odd, or *vice versa*, the output beam exits the cell at co-ordinates that vary in the x-y plane, depending on the values of $M_x$, $M_y$ and N. Since there is no simple *a priori* prediction of where these positions lie, this is considered less useful than the first case for applications that would typically benefit from a Herriott-style cell (using either spherical or astigmatic mirrors).

A further restriction on allowed spot patterns is degeneracy of higher order patterns which are multiples of lower order patterns. Similar to the modulo K restrictions of spherical and astigmatic cells, we find that for N/2 = odd patterns, solutions where $M_x$ and $M_y$ are both a multiple of the same prime factor of N (other than 2) are not allowed. For example, if N = 42, then 3 and 7 are prime factors of N. Solutions with $M_x = 14$, $M_y = 14$ or $M_x = 6$, $M_y = 12$ would not be valid ($M_x$ and $M_y$ are both multiples of the same prime number 7 or 3, respectively), but $M_x = 14$, $M_y = 12$ is allowed since $M_x$ and $M_y$ relate to different prime factors of N.

For M pairs other than even-even, similar restrictions also apply.

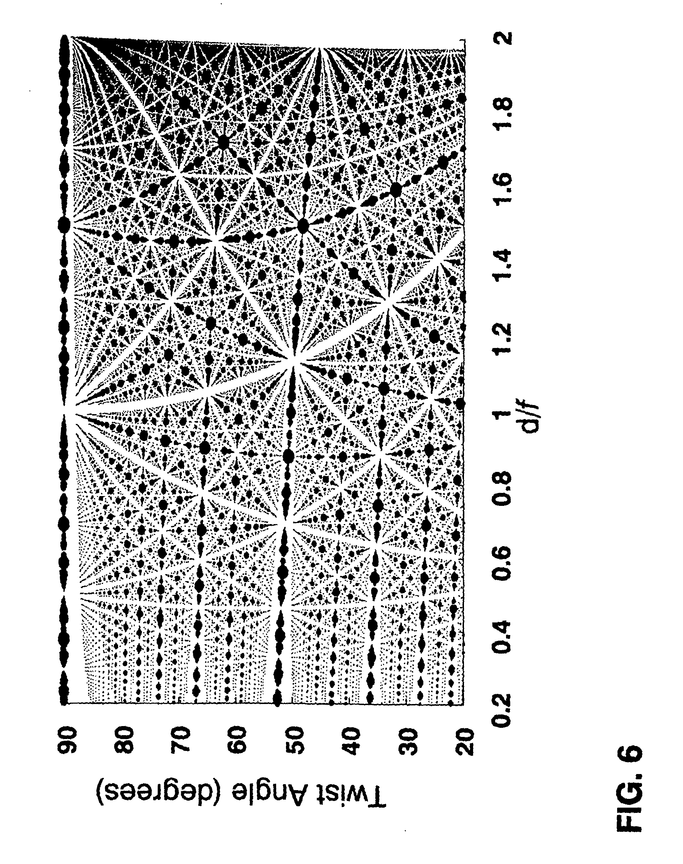

FIG. 6 illustrates the map of allowed re-entrant systems for up to 250 passes for a cylindrical mirror cell having a center input hole for $0.2 \le d/f \le 1.0$ and 20 degrees. $\le \delta \le 90$ degrees. The relative sizes of the symbols (on a logarithmic scale) inversely scale as the number of passes N, where N varies from 4 (largest symbol) to 250 (smallest). Clearly, there are many possible solutions for any desired number of passes, independent of the precise value of the focal length.

Off-axis (Edge) Input Hole Solutions

For an edge input, reasonable slopes are those that cause the spot pattern to be confined to the mirror surfaces. So if $x_0 = 0$, $y_0 = 1$, the beam slopes are generally defined so that the spot positions after the first pass are $-1 < x_1 < 1$ and $0 < y_1 < r$, where r is the radius of the mirror. However, for an initial beam slope having x' = $\pm1$ and y' = 0, the spot pattern is optimally spaced and diamond-like for twist angles other than 90 degrees. At 90 degrees, patterns are optimally circular at d = *f* and follow elliptical paths at other mirror separations similar to the spherical mirror Herriott patterns.

Only even pairs of $M_x$, $M_y$ with N/2 = odd give re-entrant solutions for off-axis systems. For odd-odd, even-odd or odd-even pairs, the Nth spot hits the front mirror at some multiple of 90 degrees away from the input hole and is not particularly useful. As with all other Herriott-style cells, additional restrictions on M values occur due to lower order degeneracies. Off-axis entry for dense patterns are in general not as useful as the on-axis cells since here there are often spots very close to the input hole.

Understanding Relationships Between M Indices and Spot Patterns

In order to identify spot patterns from observed systems using the computed patterns, it helps to better understand how the variables ($M_x$, $M_y$, N, d and δ) are interrelated. Focusing on the N/2 = odd system for now (although these rules apply to all systems), we find that for a stable cavity (0 < d < 2*f*) $M_x$ s N/2, $M_y \le N/2$, and $M_x + M_y \le N/2$. Since the mirror rotations are symmetric about 90 degrees, so are spot patterns (see FIG. 6). From a mathematical standpoint as the mirror systems of the invention are defined, $M_x > M_y$ correspond to twist angles < 90 degrees, $M_x < M_y$ to angles > 90 degrees and $M_x = M_y$ to the degenerate system at 6 = 90 degrees. In general, for any specified N, lower values of $M_x$ and $M_y$ correspond to smaller values of d. Solutions where d ~ *f* have indices whose sum is near N/2. The difference $M_x - M_y$ is a measure of the twist angle - large difference correspond to solutions near 0 degrees or 180 degrees, and smaller differences have solutions lying near 90 degrees. Thus if we decide to configure our system for 174 passes and want the mirror separation to be approximately 1.1x*f* and the twist angle near 80 degrees, these rules help in estimating the values of $M_x$ and $M_y$ which will give this pattern so that the observed pattern can be confirmed readily by a computed figure.

Presently Preferred Embodiment

A pair of commercial 5 cm-square cylindrical mirrors with *f* = 64.8 mm (Newport Corporation, Model 03SI31512) was assembled on mounts on an optical rail so that the separation could be smoothly varied. The front mirror was mounted on a rotation stage to set the twist angle. As illustrated in FIG. 4, the front mirror **2** is aligned so that the radius of curvature is in the y-z plane and the rear mirror **4** initially is set with its radius of curvature in the x-z plane. The output of a JDS Uniphase He-Ne visible laser (632.8 nm) was injected through a 3/16" dia. hole **6** in the center ($x_0 = 0$, $y_0 = 0$) of the front mirror such that at d = *f*, the first spot **8** strikes the rear mirror at $x_1 = 25$ mm, $y_1 = 0$ mm (with a slope arbitrarily defined in reduced units as $x_0' = 1$, $y_0' = 0$). The reflectivity of these mirrors at 632 nm is approximately 0.975. The intensity of the output beam from the cell is monitored by a silicon photodiode (UDT Model Number 2DI).

Using a diode laser or other laser, tuned to a wavelength corresponding to an absorption feature of a selected gas, this cell could be used to measure the concentration of that absorbing gas. For example, a 760 nm laser could be used to monitor the concentration of molecular oxygen in this cell.

Alignment of this mirror pair is simple. Setting the mirrors at approximately d = *f* (a four pass pattern shown in FIG. 4), the second spot on the front mirror **10** lies directly across from the spot corresponding to the first pass **8** ($x_2$ = $x_1$, $y_2$ = $y_1$), and the third pass reflects directly back onto spot 1 on the rear mirror. The fourth and final pass exits through the input hole along the same path 12 in which the laser beam was injected. This alignment can be verified by observing the exit spot superimposed on the input beam on any of the mirrors that point the incoming beam into the cell. In terms of cell indices, this condition is characterized by $N_{M_y}^{M_x} = 4_1^1$. As the distance is varied away from d = $f$, all spot patterns should be observed as horizontal lines. If the pattern appears two dimensional, then a minor twist angle rotation of the front mirror will quickly flatten the pattern to the desired linear shape. This setup defines the 90 degree crossed cylindrical alignment

If one were using an off-axis entry hole position (such as $x_0$ = 0, $y_0$ = 1), then there would be an 8-pass re-entrant condition (N = 8, K = 0, M = 1) with a rectangular pattern on the back mirror and a diamond on the front. Note that this assumes the same beam entry slope as with the center hole scenario. Other input slopes would give different patterns, but all could be calculated and used for initial alignments.

Now using the center-hole input, as the mirror separation is moved away from d = $f$, a series of linear spot patterns is observed, corresponding to a flattened normal Herriott pattern. As described earlier, the radial input would display elliptical patterns similar to a spherical Herriott cell. Since these spots are easily counted, we can use these as a guide (as well as measure mirror separation) to determine where we are in d-δ space before rotating the twist angle to achieve dense spot patterns.

We also note that the allowed output spot patterns (N/2 = odd) have a constant output beam position and we can align the detector now using the output beam for any N/2 = odd pattern.

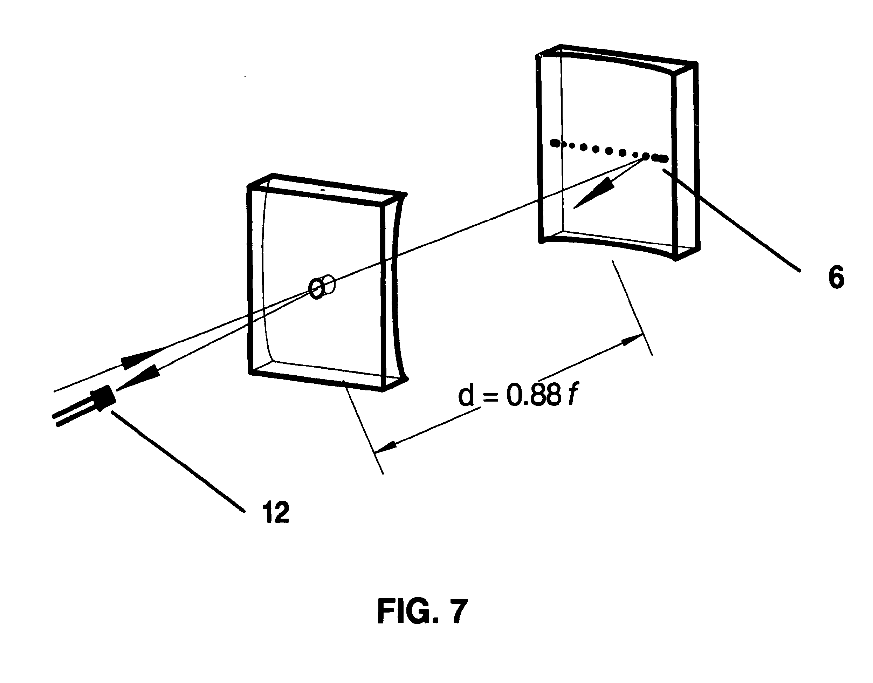

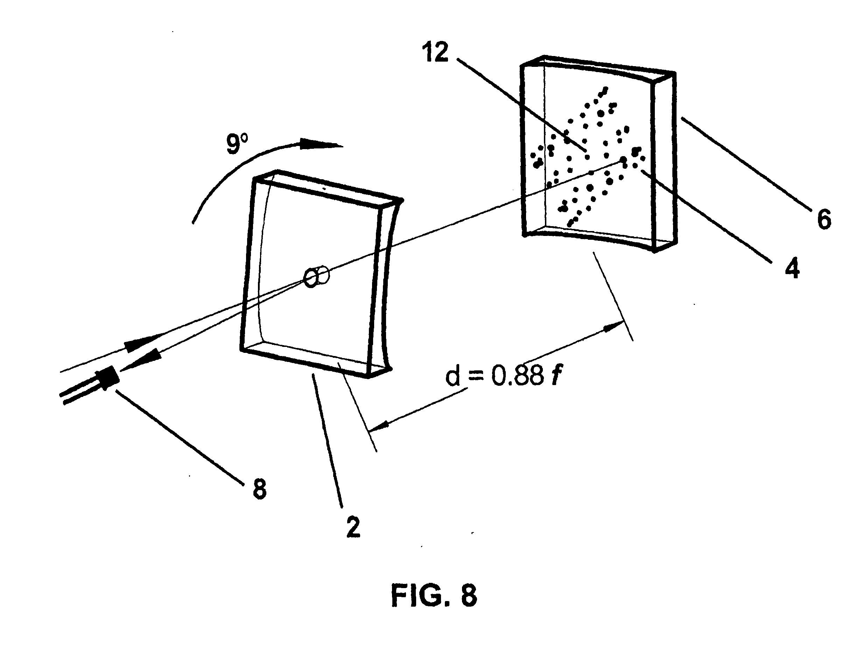

FIG. 7 shows an unrotated (δ = 90 degrees) spot pattern of N = 26 with d/$f$ = 0.88, where the beam exits the cell and strikes the photodiode **10**. As shown in FIG. 8, by rotating the front mirror **2** by about 9 degrees, a dense 122-pass pattern of spots is formed **4**. In this case the final alignment can be made by very minor distance and angle corrections to get the output spot centered on the detector **8**.

One aid in identifying allowed patterns is that these all exhibit a centrally located spot **10** ($x_{N/2}$ = 0, $y_{N/2}$ = 0) on the rear mirror **12**. This spot is always corresponds to the N/2$^{th}$ pass. As with other Herriott-type cells, this particular configuration is insensitive to mirror tilt. Many similar patterns can be achieved by various combinations of separation and rotation as predicted from the calculations illustrated in FIG. 6.

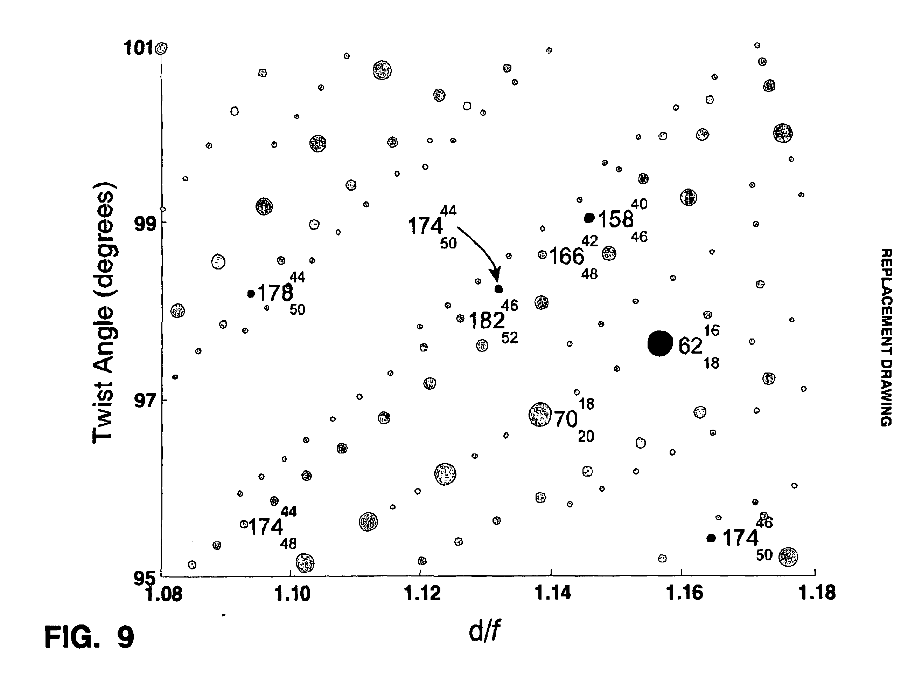

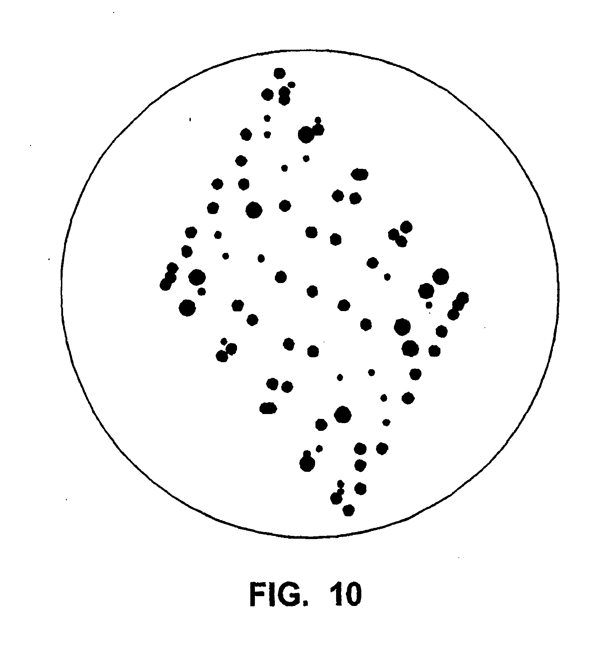

For example, if we look in FIG. 9 at an enlarged portion of FIG. 6 near d = 1.1$f$ and δ = 98 degrees, one sees that a moderate number of solutions exists, but that the $N_{M_y}^{M_x} = 174_{50}^{44}$ system should be positioned at z =1.132 and δ = 98.25 degrees. From the formulas (either matrix or analytic) we can compute the expected spot pattern shown in FIG. 10. Then adjust the mirror system to the region of z - δ space until the output spot hits the detector and the pattern matches this computation. Conversely, one can also just set the mirrors to some desired pattern and then computationally identify N, $M_x$ and $M_y$.

The increased symmetry of the cylindrical cell permits the possibility of much easier alignment and assignment of patterns, and certainly more flexibility in choosing patterns for a given system. In the astigmatic cell, there is, in general, only a single allowed exact solution for a given mirror pair, where d is determined from the defined N for the cell given by $f_x$ and $f_y$. The cylindrical cell permits virtually any solution for a given mirror pair, since the solutions depend on the ratio of d to $f$, not on the absolute value of $f$.

Unlike the astigmatic or mismatched cylindrical cell, achieving alignment of these spot patterns does not rely on the absolute manufactured focal lengths, but only on ratio d/$f$, which is easily adjusted by varying the mirror separation. Whenever, $M_x$ = $M_y$, the system is degenerate and all solutions are those of the 90 degree crossed cylindrical mirror system.

Neither the input hole nor slope is restricted, except by physical dimensions to be sure that all spots hit a mirrored surface. However, the better choices for input hole locations are in the center. As discussed earlier, the re-entrant conditions differ slightly by whether multiples of π (center) or 2π (edge) define the mapping of the spot patterns before exiting.

Note that the following variations may be employed:

(1) Different focal lengths on each mirror change patterns, spot sizes, stability criteria, but do not change overall usefulness (i.e., both mirror focal lengths do not have to be critically matched to each other or the design value).
(2) Using other input slopes - just changes spot pattern shapes.
(3) Non-central input holes - similar patterns, different restrictions; discussed above.
(4) Separate input and output holes - output hole can be used to pick off pass number N' < N if properly positioned.
(5) Not restricted to even $M_x$ - even $M_y$ patterns. One can use even-odd or odd-even. The special case of odd-odd is particularly useful for long path feedback signal into laser source.

(6) Any stable cavity distance from d > 0 to d $\leqq 2f$ is allowed and possible, although solutions in range $0.5 \leq d/f \leq 1.5$ are most useful based on relative pattern diameter and useful total path lengths.

(7) Input beam focus generally collimated or focused to some point into cell. It is often desirable to focus at midpoint of mirror separation so that all spots have approximately same diameter. In any case, output beam focusing properties can be described to appear as though the input beam just reflected off the input hole as if it were a flat mirror.

(8) Cell may be enclosed in sealed container to sample externally introduced gases or be open to the air for ambient sampling.

(9) Either mirror can be rotated relative to the other.

Industrial Applicability

The invention is further illustrated by the following non-limiting examples.

Example 1

The same cylindrical mirror cell as above except that the input hole is near the edge of the mirror.

Example 2

An intracavity absorption cell could be constructed by using $M_x$ = odd, $M_y$ = odd spot patterns, where the exiting light automatically feeds back into the laser.

Example 3

Set up the cylindrical mirrors at 90 degrees and use the cell in the same manner as one would use a conventional spherical mirror Herriott cell for absorption or other optical experiments or measurements.

Example 4

Set up the cylindrical mirrors at 90 degrees and utilize the property that the spot patterns formed are exactly linear to make one-dimensional measurements across a plane. This is useful for concentration measurements in premixed flames that use a flat flame bumer, where the concentrations of species vary in the vertical (y) axis, but are uniformly distributed in the x-z plane. The very long path achievable makes possible the measurement of species that are important to flame chemistry but have very low concentrations or weak absorptions.

Example 5

A mirror pair consisting of one spherical and one cylindrical mirror can also exhibit dense Lissajous patterns of spots, despite the fact that this system is invariant to rotation angle.

Example 6

A mirror pair consisting of one astigmatic and one cylindrical mirror can also exhibit dense Lissajous patterns of spots.

Example 7

A cylindrical mirror cell where a second hole is positioned at some spot location < N. This may be useful if the detector is large or needs to be more physically separated from the input optics that point the laser into the cell. For example, one could design a cell with holes in the center of both mirrors and put the detector behind the rear mirror hole, achieving N/2 passes for any given allowed setup conditions.

Example 8

A cylindrical mirror cell where re-entrant requirements are not met, or where the beam does not exit through the hole until after very many passes. This may be very useful for cavity ringdown or photoacoustic absorption experiments where very long paths are desired and the laser beam does not need to be directly detected.

The preceding examples can be repeated with similar success by substituting the generically or specifically described reactants and/or operating conditions of this invention for those used in the preceding examples.

The present disclosure also describes a simple, low cost and more easily aligned high density multipass optical cell, where many different paths can be achieved with one set of mirrors. The key to this disclosure is the use of one cylindrical mirror and one spherical mirror and includes the use of near re-entrant conditions, so as to remove the severe restrictions imposed in other dense pattern systems with astigmatic mirrors or crossed cylindrical mirror pairs. Since the present disclosure is fully symmetric to rotation of one mirror relative to the other, there is no need to consider relative twisting of the mirrors along their central axes. It is also insensitive to any manufacturing tolerance errors in the focal lengths of the mirrors.

For purposes of the specification and claims, a "cylindrical mirror" is one for which one radius of $r_x$ and $r_y$ is substantially infinite, the non-infinite axis being known as the "curved axis". This is in contradistinction to a "flat mirror", for which both radii are substantially infinite, and a "spherical mirror" for which both radii are non-infinite and substantially equal. An "astigmatic mirror" is a mirror for which both radii are non-infinite but not equal, usually deviating slightly from one another by design. "Near re-entrant" is defined as having the light beam exit the input hole at an x,y position close to, but not exactly equal to, the input beam position $x_0,y_0$.

The present disclosure involves injecting the laser beam through a hole in the center of either one of the mirrors and adjusting the mirror separation distance until the light exits this hole after a desired number of passes within the cell. Without complex alignment procedures, one can readily generate known dense patterns and much longer optical path lengths than with a simple Herriott cell, and with much less cost or complication than with astigmatic cells. Specific near re-entrant conditions have been identified and are easily set by various combinations of input beam slope and mirror separation.

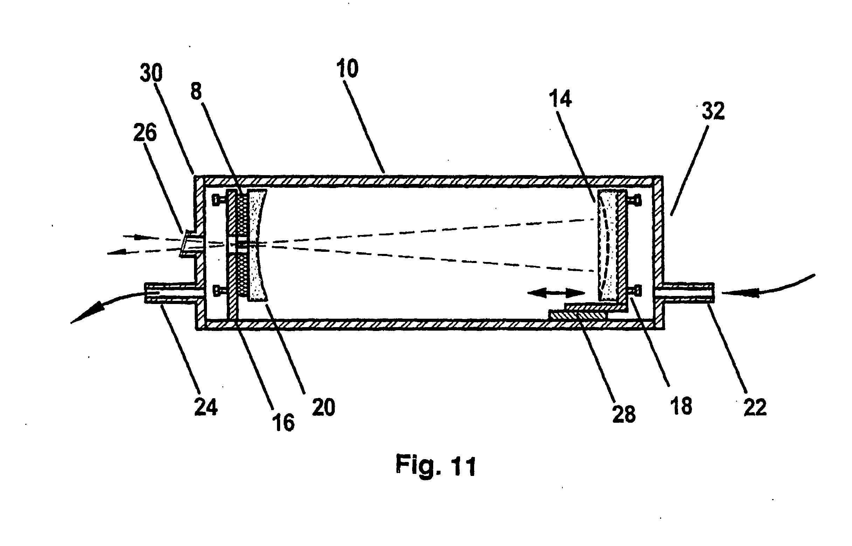

FIG. 11 is a drawing of the preferred embodiment for the present disclosure. The cylindrical mirror **20** and spherical mirror **14** are attached to adjustable-tilt mirrors mounts **16** and **18,** respectively, which are attached to an open frame or closed cell **10** separated by distance d. In this example, one of the mirror mounts is attached to a means **28** to permit variable adjustment of the mirror separation. A light source or laser is pointed into the cell at the appropriate direction (slope) and a detector mounted outside the cell collects the light after transmission through the multiple pass optics. In the case of a closed cell, the gas is input at one end **22** and pumped out through a second port **24** at the other end. In this case, sealed end flanges **32** and **30** are attached to the cell wall. A window **18** is used to permit the light to enter and exit the sealed cell so that no ambient gas can interfere with the gas sample inside the cell. An optional rotation stage 8 allows the user to rotate the axis of the cylindrical mirror relative to the cell axis.

This description begins with a discussion of the prior art spherical Herriott cell theory and then briefly describes the prior art astigmatic cell design and restrictions to provide a basis for the new cylindrical-spherical cell disclosure.

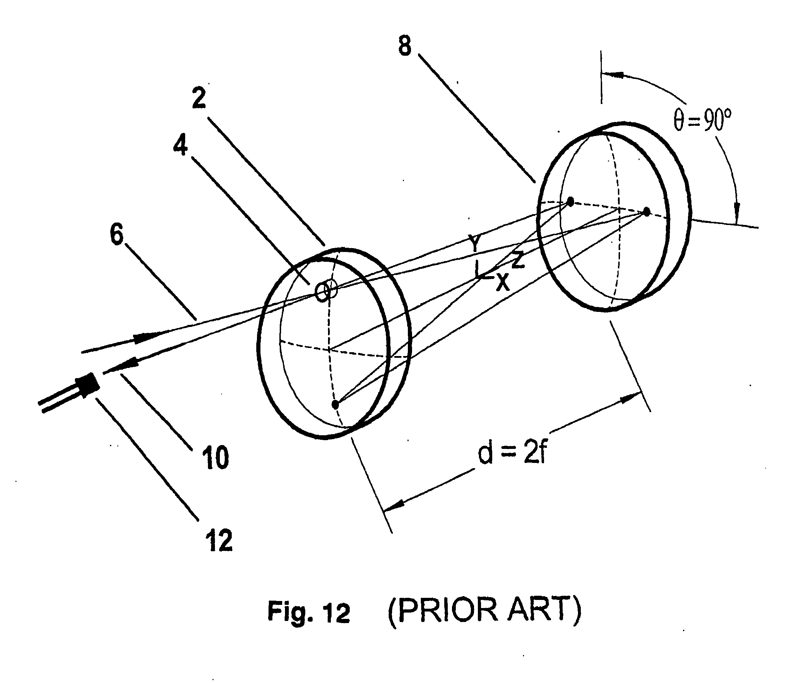

As generally set up (FIG. 12), the normal Herriott cell comprises one spherical mirror ("front") 2 of focal length $f$ with an off-axis entrance hole **4** (at co-ordinates $x_0$ and $y_0$) through which the laser beam 6 is injected with slopes $x_o'$ and $y_o'$ and pointed at a second spherical mirror **8** ("rear"), also of focal length $f$. This beam is then periodically reflected and refocused such that the beam eventually exits exactly through the center of the input hole **4** (re-entrant condition) but in the opposite direction (slope) of the input beam so as to make possible the placement of a detector **10** without obstructing the input beam. The conditions for re-entry and the number of passes in the cell (even integer N) are governed by the focal lengths of the mirrors $f$, their separation d and the initial slopes of the input beam ($x_0'$ and $y_0'$) relative to the ratio of d/$f$. The total optical path within the cell is approximately d $\times$ N. The patterns of spots on the mirrors trace out an ellipse, where the co-ordinates of the spots of the i$^{th}$ pass are:

$$x_i = x_0 \cos(i\theta) + \sqrt{\frac{d}{4f-d}}\,(x_0 + 2fx_0')\sin(i\theta), \tag{14}$$

with a corresponding equation for y. Thus $x_i$ is the projection of the maximum position ($X_{max}$) in the spot pattern. The $x_i$ position changes on each pass with an incremental increase of integer i in the angle $\theta$. For the off-axis injection of the laser beam as shown in FIG. 12, the light will exit the cell exactly through the center of the input hole at $x_0$ and $y_0$ after an integral number of $2\pi$ multiples of $\theta$, so that:

$$\theta_R = 2\pi M / N \text{ and}$$
$$d = 2f(1 - \cos\theta_R), \tag{15}$$

where the number of complete orbits of spots before exiting is denoted by the integer index M; $\theta_R$ is the angular projection advance angle for each sequential pass. This configuration defines an allowed re-entrant condition. Thus after N passes, the spot pattern has rotated a multiple of $2\pi$ in both x and y co-ordinates, and exits through the input hole. While many possible solutions for N and M exist for any given set of input conditions, the generally used initial conditions (with the off-axis input hole defined as $x_0 = 0$, $y_o = 1$) is to align the first pass at $x_1 = 1$, $y_1 = 0$ (i.e., input slopes corresponding to $x_0' = 1$, $y_o' = -1$ in reduced units of $d/2f$). This condition generates a circle with N = 4 at d = 2f. This is illustrated in FIG. 12. Under these conditions, all patterns can be characterized by:

$$N = 4M \pm K, \tag{16}$$

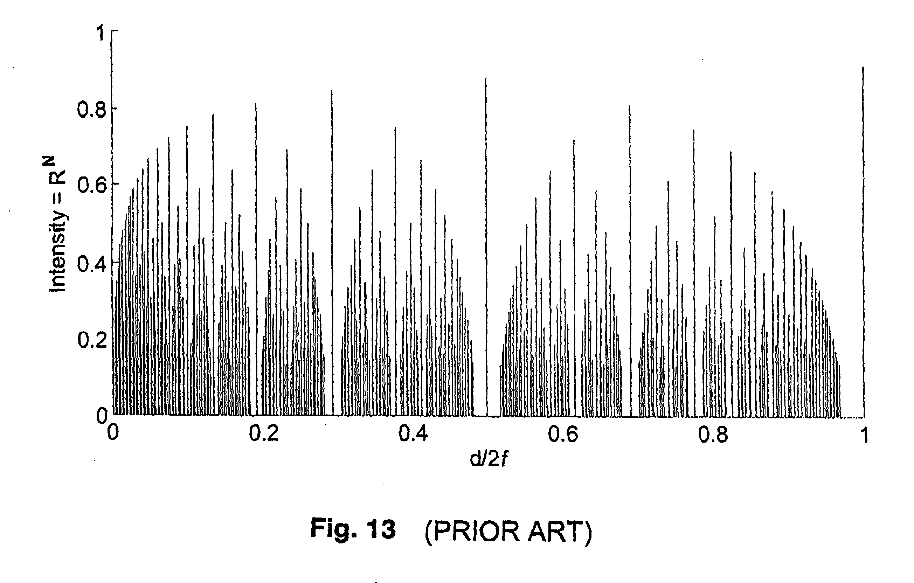

where K is an even integer, and positive K correspond to solutions of d < 2f and negative K to solutions for d > 2f (up to a maximum allowed separation of 4f). In general, -K solutions are not as useful since the beam patterns trend toward being much larger in size than the input hole position as the mirror separation increases beyond 2f. While many different (M, N) pairs can generate the same fraction (angular advance $\theta$) in Eqn. 15, only the set with the lowest N is allowed. All other sets cannot be achieved since the pattern will exit at a pass number less than N. For example, M = 2, N = 10 gives a fraction of 1/5 and $\theta = 0.4\pi$. Since M = 4 and N = 20 also gives a fraction of 1/5, this 20-pass configuration can't be achieved because the beam would exit after the tenth pass. As further elaborated by McManus, these rules can be formalized by computing modulo orders of the corresponding K values for any N (McManus, J. B. and Kebabian, P.L., "Narrow optical interference fringes for certain setup conditions in multipass absorption cells of the Herriott type," Appl. Opt., vol. 29, No. 7, pp 898-900 (1 Mar. 1990)). FIG. 13 illustrates the pattern of allowed solutions for the spherical Herriott cell as a function of the ratio d/2f. The transmitted intensity is equal to $R^N$, where R is the reflectivity of the mirrors (0.98 here) and N the total number of passes through the cell. For d > 2f, the pattern is just a mirror image reflected about d = 2f. The patterns of allowed passes correspond to various families of {N, M, K}.

The useful properties of the spherical Herriott cell are that virtually any desired optical path length and number of passes can be achieved by simply adjusting the mirror separation distance. The output spot position is fixed regardless of the spot pattern or number of passes, and this output position is invariant to slight tilt or misalignment of the mirrors. Thus once the initial beam is aligned and the detector located, the number of passes and path length are readily adjusted by simply moving the position of the rear mirror along the axis.

High Density Cells

In order to achieve a higher density of spots, which leads to longer paths lengths for the same sized cell, Herriott developed a multipass optical cell using a pair of astigmatic mirrors (Herriott, D. R. and Schulte, H. J., "Folded Optical Delay Lines," Appl. Opt., vol. 4, No. 8, pp 883-889 (Aug. 1965)). Each mirror has a different finite focal length along its orthogonal x and y axes, $f_x$ and $f_y$. Thus unlike the spherical cell, the astigmatic cell x and y co-ordinates have separate, independent solutions. With the input hole now in the center of the mirror, the x and y co-ordinates for the $i^{th}$ spot are defined by:

$$
\begin{aligned}
x_i &= X_{max} \sin(i\theta_x), \\
y_i &= Y_{max} \sin(i\theta_y), \\
\theta_x &= \cos^{-1}(1 - d/2f_x), \text{ and} \\
\theta_y &= \cos^{-1}(1 - d/2f_y),
\end{aligned}
\tag{17}
$$

where $X_{max}$ and $Y_{max}$ are the maximum positions of x and y in the spot pattern. The re-entrant solutions for $\mathbf{M_x}$ and $\mathbf{M_y}$ are slightly different than in Eqn. (15),

$$
\begin{aligned}
\theta_{xR} &= \pi M_x / N, \text{ and} \\
\theta_{yR} &= \pi M_y / N,
\end{aligned}
\tag{18}
$$

because the beam can exit after only $\pi$ radians, rather than a full $2\pi$ when the input hole is at the edge of the pattern. M here can be viewed as the number of half-orbits of spots before each co-ordinate exits. As a result, the allowed indices are now defined here by:

$$N = 2M_x + K_x = 2M_y + K_y. \qquad (19)$$

Thus, to achieve re-entrant conditions, two simultaneous equations must be solved for a desired set of [N, $M_x$, $M_y$]. This results in specific design values for d, $f_x$ and *fy*, making the system much less flexible for being able to select N with a particular set of mirrors. This is in contrast to the normal spherical Herriott cell where the ratio of $d/f$ can be adjusted to give a range of thetas, and thus a series of many differing re-entrant spot patterns for a given mirror pair. Since both half and full orbits of the spot patterns can be re-entrant, the beam can exit into any quadrant of x-y space. Optimal solutions can be found where the beam exits in a plane opposite the input beam onto a unique, fixed position, where patterns minimize spots near the input hole and where common factors (lower order exits at passes < N) are avoided. These solutions require that N/2 be an odd integer and $M_x$ and $M_y$ be even integers.

In order to achieve a re-entrant design, manufacturing criteria on the precision for d, $f_x$ and $f_y$ are so severe that a commercially produced cell is almost impossible to make reliably and repeatedly. The focal lengths must be precise to better than 1 part in $10^4$. Kebabian (U.S. Pat. No. 5,291,265 (1994)) devised a method to make the astigmatic cell usable by rotating the axis of one astigmatic mirror relative to the other and thereby mixing the (previously independent) x and y components of the beam co-ordinates. A moderate rotation of ~5-20 degrees and a small compensating adjustment of the mirror separation distance can accommodate the imprecision in the manufacturing of the mirror focal lengths. However, this approach is still difficult to achieve in practice and requires complex calculations and skill to get to the desired pattern. Furthermore, the astigmatic mirrors must be custom made and cost many thousands of dollars for a single pair.

Numerical Determination of Spot Patterns

In all of these Herriott-style systems, the precise patterns of spot locations can be computed either directly from matrix multiplication methods or from analytic solutions of the relevant ray tracing equations derived from these matrices.

Using ray matrix theory as outlined by Yariv (Yariv, A., "The Propagation of Rays and Spherical Waves," from Introduction to Optical Electronics, Holt, Reinhart, and Winston, Inc., New York (1971), Chap. 2, pp 18-29), the propagation of light rays through an optical system is readily understood. Given the $x_0$ and $y_0$ components and respective slopes $x_0'$ and $y_0'$ of the incident ray, the positions and slopes after each action (translation, reflection, etc.) are:

$$\mathbf{r}_{i+1} = \begin{bmatrix} x_{i+1} \\ x'_{i+1} \\ y_{i+1} \\ y'_{i+1} \end{bmatrix} = \mathbf{M} \cdot \mathbf{r}_i = [4 \times 4] \begin{bmatrix} x_i \\ x'_i \\ y_i \\ y'_i \end{bmatrix}, \qquad (20)$$

where the (i+1)th vector r is related to the previous pass i by a square matrix **M** that represents coefficients that perform the specified optical operation. For the specific case of two mirrors, we can find the position and slopes of the ray after one round-trip of the cell, denoted by index *n*, as the product of $\mathbf{R}_1 \cdot \mathbf{D} \cdot \mathbf{R}_2 \cdot \mathbf{D} \equiv \mathbf{C}$, where **R** is a reflection matrix, **D** a translation matrix and the subscripts 1 and 2 correspond to each of the two mirrors. For *n* round trips, then we can express $\mathbf{r}_n = \mathbf{C}^n \cdot \mathbf{r}_o$.

If the x and y components are uncoupled, then we can use separate 2×2 matrices for each x and y component. Thus the four elements of the solution C can be expressed as:

$$\mathbf{C} = \begin{bmatrix} A & B \\ C & D \end{bmatrix}, \qquad (21)$$

The relevant matrices for translation and reflection, where *f* is the focal length (radius of curvature/2) along the specified component axis and d the separation, are:

$$D = \begin{bmatrix} 1 & d \\ 0 & 1 \end{bmatrix} \text{ and } R = \begin{bmatrix} 1 & 0 \\ -1/f & 1 \end{bmatrix}. \tag{22}$$

From the equations above, C can be computed using matrix multiplication and the resulting elements of C used to derive a recursive solution for each 2x2 operation for x (or similarly y) as:

$$x_{n+2} - 2bx_{n+1} + \gamma x_n = 0,$$
$$\text{where } b = \frac{1}{2}(A + D) \tag{23}$$
$$\text{and } \gamma = AD - BC = 1.$$

It can also be shown that b = cos(2θ), where 2θ is twice the advance angle defined in Eqn. 14, since this formulation is describing a round-trip of two sequential passes. The stability criterion for θ to be real also creates the restriction $|b| \leq 1$. The angle theta is the centroid of revolution of the x or y component.

For the prior art astigmatic Herriott cell (without rotation of the mirrors), there are different solutions for $\theta_x$ and $\theta_y$, so that re-entrant solutions must satisfy two simultaneous equations.

If the principal axis of a non-spherical mirror is not aligned with x or y, but twisted by an angle δ, as suggested by Kebabian, then a 4x4 matrix must be used to include cross-terms (coupling of x and y) and the rotation matrix for this situation is defined by **R'** = T(-δ)-R-T(-δ),

$$T(\theta_{tw}) = \begin{bmatrix} \cos\delta & 0 & \sin\delta & 0 \\ 0 & \cos\delta & 0 & \sin\delta \\ -\sin\delta & 0 & \cos\delta & 0 \\ 0 & -\sin\delta & 0 & \cos\delta \end{bmatrix}. \tag{24}$$

This rotated reflection matrix and its corresponding 4×4 translation matrix must be used when either mirror is rotated away from an orthogonal axis. Note that this matrix approach is general in nature and can be used for any two-mirror system.

For the present cylindrical-spherical cell, there is no possible relative rotation of mirror axes, so all analyses use the simpler 2 x 2 matrix formulas.

Analytic Formulation

From the formulations presented above, generalized analytic solutions similar to Eqn. 23 can be derived for any mirror system, where the positions of each spot for the nth round-trip are given by a recursion formula. Unfortunately, for those systems requiring relative rotations of mirrors (coupling of x and y axes), the solutions are very complicated algebraic expressions and the matrix formulation for these systems is preferred.

Detailed Solutions for a Cylindrical-Spherical Mirror System

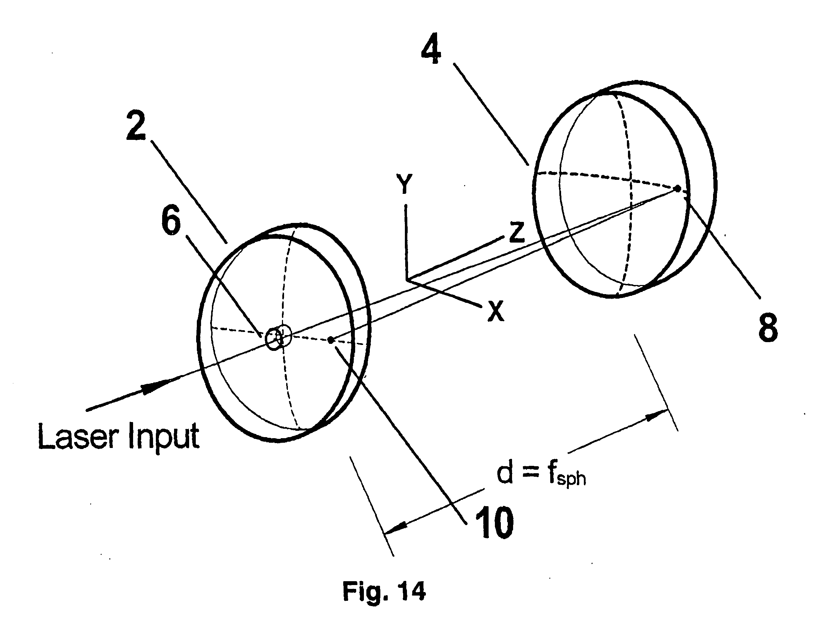

Turning now to the present disclosure, define the cylindrical-spherical mirror cell (FIG. 14) as having one cylindrical mirror **2** with its focal length $f_{cyl}$, of its curved axis arbitrarily defined in the y-z plane and one spherical mirror **4** with focal length $f_{sph}$. In this case the input mirror is cylindrical and the rear (folding) mirror is spherical, but this configuration could just as well be reversed. The input hole 6 is located in the center of mirror 2.

This optical system can be simply represented by 2×2 matrices derived from Eqn. 22 where the x-coordinate **R₁** uses 0 and **R₂** uses $1/f_{sph}$ for the inverse focal lengths, and the y-coordinate for R₁ uses $1/f_{cyl}$ and R₂ uses $1/f_{sph}$. Solving for b and y in Eqn. 23, the stability criteria as discussed earlier become:

$$0 \le d \le 2f_{sph} \qquad , \quad x-axis$$

$$0 \le \left(1-\frac{d}{2f_{sph}}\right)\left(1-\frac{d}{2f_{cyl}}\right) \le 1 \quad , \quad y-axis \qquad (25)$$

where the smaller of the distances for x or y is limiting. Similar to Eqn. 23, the spot locations for the $n^{th}$ round-trip are expressed by a recursion formula

$$x_{n+2} - 2\left(1-\frac{d}{f_s}\right)x_{n+1} + x_n = 0, \quad and$$

$$y_{n+2} - 2\left(1-\frac{d}{f_{sph}}-\frac{d}{f_{cyl}}+\frac{d^2}{f_{sph}f_{cyl}}\right)y_{n+1} + y_n = 0. \qquad (26)$$

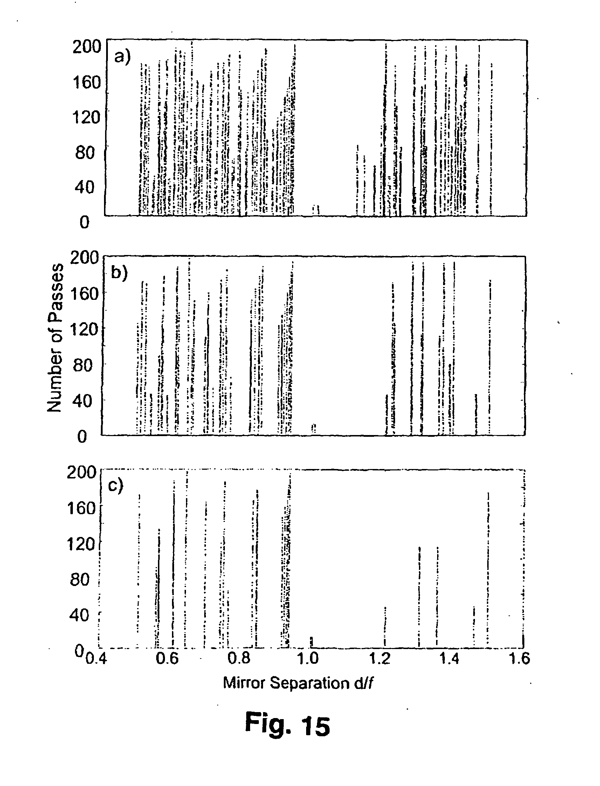

For any specified set of mirrors, we can use the matrix or analytic equations to follow the spot positions on the input mirror for each pass (given the input slope and input hole diameter) to determine at which pass number the beam exits the hole as a function of mirror separation distance d. FIG. 15 is a plot of near re-entrant pass number for beams exiting the cell as a function of mirror separation d. In these calculations, the mirror separation is varied from 0.5 < d/$f$ < 1.5, in steps of 0.008 d/$f$, where the focal lengths of both mirrors are kept equal for convenience.

If one examines the location of any given spot with pass number N on the input mirror as the mirror separation is smoothly varied, its position maps out a Lissajous pattern that at some point crosses the exit hole. After some additional small distance change it again resumes its trajectory on the mirror surface until its next encounter with the hole. Of course, if one wanted to use this N number of passes, one would simply adjust the distance so that the exiting beam was as closely spaced to the center of the hole as possible (defining the near re-entrant condition). In cases where the spot is exactly centered, this is a true re-entrant condition as described earlier. For any cylindrical-spherical system where both mirrors have the same focal length, there is only one exactly re-entrant solution. This corresponds to 12 passes at d = $f$. For unequal focal lengths, there is generally no re-entrant solution, although for specific combinations of mirror focal lengths, corresponding re-entrant solutions do exist.

For a large input hole, the beam tends to exit after fewer passes than when the hole is small, since its trajectory is more likely to encounter the bigger hole. A larger input slope causes the overall spot pattern to cover a larger area, thus spreading out the spots. Thus the proper scaling factor is the ratio of the hole size to input slopes. In addition, since the input slopes are generally maximized to make the pattern as large as possible to best fill the mirrors, then the ratio of the input hole diameter to mirror diameter is also a useful scaling parameter. The variation of near re-entrant pass numbers with mirror separation for a few different input diameter-to-maximum pattern size ratios is shown in FIG. 15 (limited to 200 passes maximum). As expected, as the hole gets relatively smaller, the number of solutions (for N<200) decreases.

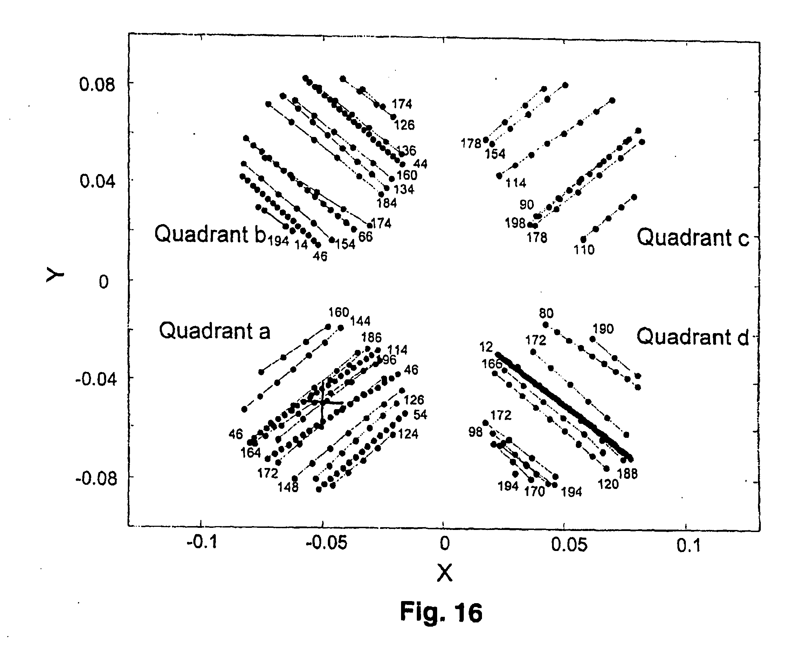

The exit slope is also important. Like the fully re-entrant systems, one would like the exiting beam to be physically separated from the input beam so as to permit placement of additional optical components or a photodetector without clipping or blocking the input beam. FIG. 16 is a plot of the beam exit locations (using the case of FiG. 15b) in the x-y plane just outside the input mirror, computed by noting the exit pass number. Over the small region of d where a given Nth spot exits, the spot position moves across the hole as described above, where the circular symbols on each line correspond to individual steps of d/$f$ of 0.008. Note that for lower N the spot trajectory travels more slowly across the hole and for higher N, the symbols are more widely spaced as the velocity of the trajectory increases. The input beam location is noted by the + symbol in quadrant a. The most useful exit conditions are those where the beams are in the quadrant opposite the input beam, although adjacent quadrants can also be used for placing the detector. In any case, any of quadrants b, c, or d has a sufficient number of solutions to be useful for selecting a wide range of N for measurement.

Presently Preferred Embodiment

A commercial 5 cm-square cylindrical mirror with $f_{cyl}$ = 64.84 mm (Newport Corporation, Model 03SI31512) and a 5 mm (2-inch) diameter spherical mirror with $f_{sph}$ = 100 mm were assembled on mounts on an optical rail so that the separation could be smoothly varied. As illustrated in FIG. 14, the cylindrical front mirror 2 is aligned so that the radius of curvature is in the y-z plane. For initial alignment steps, the output of a JDS Uniphase He-Ne visible laser (632.8 nm) was injected through a 3/16" dia. hole 6 in the center ($x_o = 0$, $y_o = 0$) of the front mirror such that at a separation equal to the focal length of the rear spherical mirror 4 ($d = f_{sph} = 100$ mm), the first spot 8 strikes the rear spherical mirror at $x_1 = 20$ mm, $y_1 = 0$ mm (with a slope arbitrarily defined in reduced units as $x_0' = 1$, $y_0' = 0$). The reflectivity of these mirrors at 632 nm is approximately 0.975. The intensity of the output beam from the cell is monitored by a silicon photodiode (UDT Model Number 2DI). Since the source of the first spot on the spherical mirror originates at a distance equal to its focal length, the reflected beam is then collimated (parallel) to the cell axis and strikes mirror 2 (spot number 2) at position 10 that also has co-ordinates $x_2 = 20$ mm, $y_2 = 0$. Since the cylindrical mirror is flat along the x-axis at $y = 0$, the cylindrical mirror here acts as a flat mirror and the beam retraces its initial path back to spot 1 (pass number 3) and out the center of input hole (pass four) exactly aligned along the path of the input beam. As shown in FIG. 14, this four pass (fully re-entrant) alignment condition is very simple and permits the initial proper settings of tilt adjustments and separation of the mirrors to make them parallel and define the separation axis.

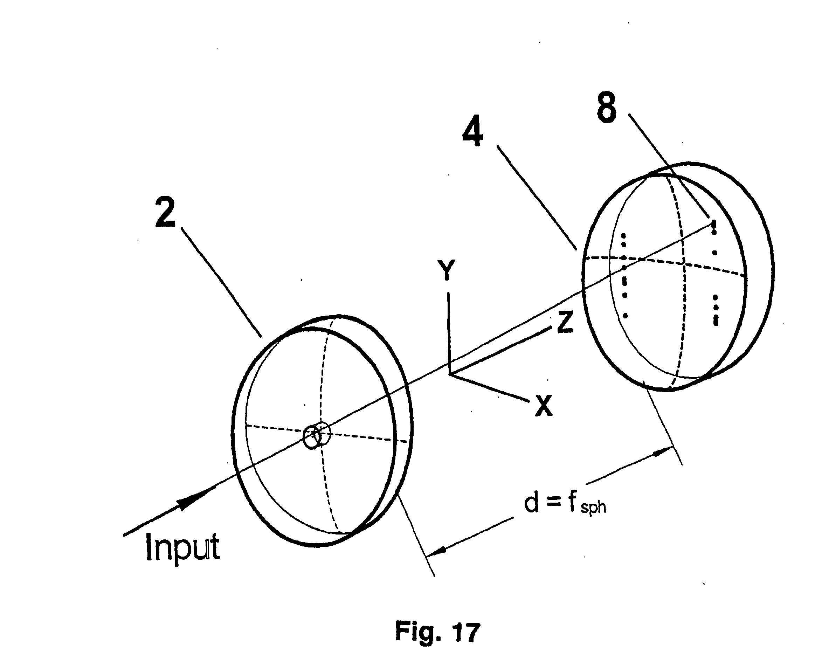

If the input slopes are now adjusted to $x_0' = .7071$, $y_0' = .7071$ ($x_1 = y_1 = 14.14$ mm), then the pattern of spots appears as illustrated in FIG. 17. We note that although this mirror system is insensitive to rotation of one mirror relative to another (unlike any of the other dense pattern multiple pass cell methods), rotation of the entire cell (or equivalently, rotation of the cylindrical mirror only since the spherical mirror is fully symmetric about the rotation axis) is identical to changing the input slopes as long as the radial distance from the center of mirror 4 to the spot 8 is unchanged. For this reason, the optional rotation stage 8 in FIG.11 is included. As a result, this new set of slopes results in patterns fully equivalent to those observed if instead the cylindrical mirror axis had been rotated by 45 degrees relative to the initial input slopes. In this case, a near re-entrant dense pattern comprising two lines of spots is observed on the rear mirror 4, for a total of 36 passes before exiting the cell.

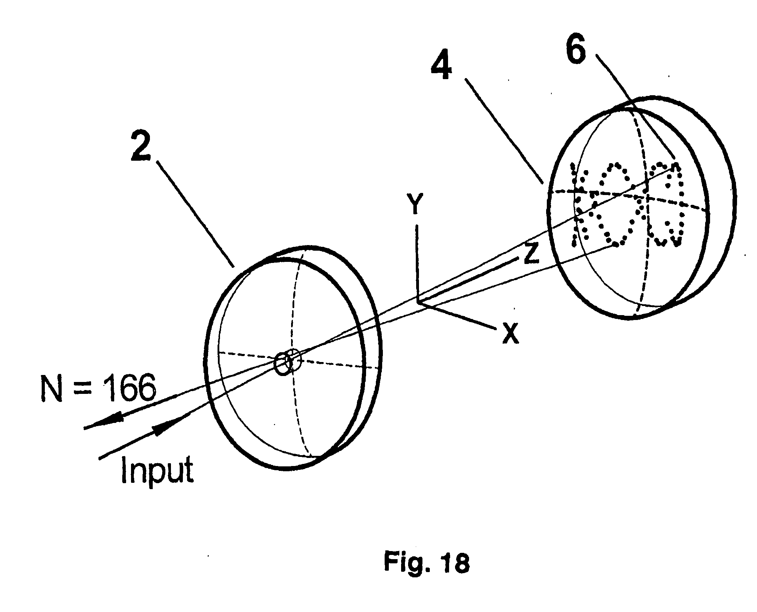

Other dense patterns of spots are now achievable by varying the mirror separation. For example, FIG. 18 illustrates a pattern for N = 166 passes when the separation d = 98.1 mm. In this case the output beam well is separated from the input beam and provides an excellent example for a usable dense pattern multipass cell.

Using other separations and input slopes, many different near re-entrant patterns can be readily found. Using a diode laser or other laser, tuned to a wavelength corresponding to an absorption feature of a selected gas, this cell could be used to measure the concentration of that absorbing gas. For example, a 760 nm laser could be used to monitor the concentration of molecular oxygen in this cell.

Unlike other dense pattern cells, where achieving alignment of spot patterns rely on the absolute manufactured focal lengths or relative twisting of the mirror axes, this system uses only the ratio d/f and the input slopes to select the number of passes.

Neither the input hole diameter, slope or mirror separations are restricted, except by stability constraints and by physical dimensions to be sure that all spots hit a mirrored surface. However, the better choices are to keep d approximately between 0.5 and 1.5 times the mean focal length, and the input hole diameter below 10% of the mirror diameters.

Note that the following variations may be employed:

(1) Different focal lengths on each mirror change patterns, spot sizes, stability criteria, but do not change overall usefulness.
(2) Using other input slopes changes the overall shape of the spot pattern, so that the exit patterns will change as predicted by the theory as spot trajectories cross the hole on earlier or later numbers of passes.
(3) Non-central input holes can also be used to allow similar patterns.
(4) Separate input and output holes - an additional output hole can be used to pick off pass N if properly positioned.
(5) The use of a prism, mirror or other compact optical device to couple the light into or out of the cell instead of a hole. Any such entrance and/or exit mechanism can be employed.
(6) Any stable cavity distance as restricted only by Eqn. 12 is allowed and possible, although solutions in range $0.5 \leq d/f \leq 1.5$ are most useful based on relative pattern diameter and useful total path lengths.
(7) Input beam focus is generally collimated or focused to some point into cell. It is often desirable to focus at midpoint of mirror separation so that all spots have approximately same diameter.
(8) Cell may be enclosed in sealed container to sample externally introduced gases or be open to the air for ambient sampling.
(9) Either mirror can be used with the input hole; the matrix formulas and analyses just have to revised accordingly. Exit patterns are similar in both cases.

Industrial Applicability

The disclosure is further illustrated by the following non-limiting examples.

Example 1

The same cylindrical mirror cell as above except that the input hole is near the edge of the mirror.

Example 2

A cylindrical-spherical mirror cell where the beam does not exit through the hole until after very many passes and is not detected after exiting. This may be very useful for cavity ringdown or photoacoustic absorption experiments where very long paths are desired and the exiting laser beam does not need to be directly detected.

Example 3

A cylindrical-spherical mirror cell where the input hole is located in the spherical mirror and the cylindrical mirror has spots corresponding to odd-numbered passes.

The preceding examples can be repeated with similar success by substituting the generically or specifically described reactants and/or operating conditions of this disclosure for those used in the preceding examples.

Although the invention has been described in detail with particular reference to these preferred embodiments, other embodiments can achieve the same results. Variations and modifications of the present invention will be obvious to those skilled in the art and it is intended to cover in the appended claims all such modifications and equivalents.

**Claims**

1. A multiple pass optical cell comprising a pair of opposed cylindrical mirrors, said mirrors having substantially equal focal lengths, an entrance hole disposed in one of said mirrors for introducing light into the cell, wherein said entrance hole is also an exit hole for extracting light from the cell, defining respectively a re-entrant arrangement and wherein the axes of said mirrors are crossed at angles other than any of approximately 0, 90, 180 and 270 degrees, so as to cause that the cell provides a dense pattern of spots on said mirrors that provides many more passes of light than a conventional Herriott cell.

2. The optical cell of claim 1 additionally comprising a rotation mount for one of said mirrors permitting rotation of said axes with respect to one another.

3. The optical cell of claim 1 or 2 wherein a number of passes of light between the two mirrors exist for light entering said hole and exiting said hole for any given combination of mirror separation distance and angle of crossing of said axes.

4. The optical cell of any one of claims 1-3 wherein manufacturing tolerances as to said focal lengths are adjusted for by varying mirror separation distance.

5. A multiple pass optical cell method comprising the steps of:

   providing a pair of opposed cylindrical mirrors, the mirrors having substantially equal focal lengths;
   positioning an entrance hole in one of the mirrors for introducing light into the cell and the entrance hole also being an exit hole for extracting light from the cell, wherein the hole defines respectively a re-entrant arrangement;
   introducing light into the cell through the hole;
   extracting light from the cell through the hole; and
   positioning the axes of the mirrors crossed at angles other than any of approximately 0, 90, 180, and 270 degrees, so as to provide a dense pattern of spots on the mirrors to provide many more passes of light than a conventional Herriott cell.

6. The method of claim 5 additionally comprising the step of providing a rotation mount for one of the mirrors permitting rotation of the axes with respect to one another.

7. The method of claim 5 or 6 wherein a number of passes of light between the two mirrors exist for light entering the hole and exiting the hole for any given combination of mirror separation distance and angle of crossing of the axes.

8. The method of any one of claims 5-7 wherein manufacturing tolerances as to the focal lengths are adjusted for by varying mirror separation distance.

**Patentansprüche**

1. Eine optische Zelle mit Mehrfachdurchgang, die ein Paar von entgegengesetzten zylindrischen Spiegeln, wobei die Spiegel im Wesentlichen gleiche fokale Längen aufweisen, eine Eingangsöffnung, die in einem der Spiegel für den Lichteinlass in die Zelle angebracht ist, umfasst, wobei die Eingangsöffnung auch eine Ausgangsöffnung für den Lichtauslass aus der Zelle ist, die jeweils eine Anordnung mit Wiedereintritt definiert, und wobei sich die Achsen der Spiegel bei Winkeln mit Ausnahme von etwa 0, 90, 180 und 270 Grad kreuzen, so dass bewirkt wird, dass die Zelle ein dichtes Muster von Punkten auf den Spiegeln bereitstellt, die wesentlich mehr Lichtdurchgänge als eine herkömmliche Herriott-Zelle bereitstellt.

2. Die optische Zelle nach Anspruch 1, die zusätzlich eine Drehhalterung für einen der Spiegel umfasst, die eine Drehung der Achsen in Bezug zu einander gestattet.

3. Die optische Zelle nach Anspruch 1 oder 2, wobei eine Anzahl von Lichtdurchgängen zwischen den beiden Spiegeln für Licht, das in die Öffnung gelangt und die Öffnung verlässt, für eine beliebige gegebene Kombination aus Trennabstand der Spiegel und Kreuzungswinkel der Achsen vorhanden ist.

4. Die optische Zelle nach einem der Ansprüche 1-3, wobei die Herstellungstoleranzen hinsichtlich der fokalen Längen durch Veränderung des Trennabstandes der Spiegel eingestellt werden.

5. Ein Verfahren für eine optische Zelle mit Mehrfachdurchgang, die folgende Schritte umfasst:

   Bereitstellen eines Paares von entgegengesetzten zylindrischen Spiegeln, wobei die Spiegel im Wesentlichen gleiche fokale Längen aufweisen;
   Positionieren einer Eingangsöffnung in einem der Spiegel für den Lichteinlass in die Zelle, wobei die Eingangsöffnung auch eine Ausgangsöffnung für den Lichtauslass aus der Zelle ist und die Öffnung jeweils eine Anordnung mit Wiedereintritt definiert;
   Einlassen von Licht in die Zelle durch die Öffnung;
   Auslassen von Licht aus der Zelle durch die Öffnung; und
   Positionieren der Achsen der Spiegel, die sich bei Winkeln mit Ausnahme von etwa 0, 90, 180 und 270 Grad kreuzen, so dass ein dichtes Muster von Punkten auf den Spiegeln bereitgestellt wird, um wesentlich mehr Lichtdurchgänge als eine herkömmliche Herriott-Zelle bereitzustellen.

6. Das Verfahren nach Anspruch 5, das zusätzlich folgenden Schritt umfasst: Bereitstellen einer Drehhalterung für einen der Spiegel, die eine Drehung der Achsen in Bezug zu einander gestattet.

7. Das Verfahren nach Anspruch 5 oder 6, wobei eine Anzahl von Lichtdurchgängen zwischen den beiden Spiegeln für Licht, das in die Öffnung gelangt und die Öffnung verlässt, für eine beliebige gegebene Kombination aus Trennabstand der Spiegel und Kreuzungswinkel der Achsen vorhanden ist.

8. Das Verfahren nach einem der Ansprüche 5-7, wobei die Herstellungstoleranzen hinsichtlich der fokalen Längen durch Veränderung des Trennabstandes der Spiegel eingestellt werden.

**Revendications**

1. Cellule optique à multiples passages comprenant une paire de miroirs cylindriques opposés, lesdits miroirs ayant des longueurs focales sensiblement égales, un trou d'entrée disposé dans l'un desdits miroirs pour introduire de la lumière dans la cellule, ledit trou d'entrée étant également un trou de sortie pour extraire de la lumière de la cellule, définissant respectivement un agencement rentrant, et les axes desdits miroirs se croisant à des angles autres que l'un quelconque parmi approximativement 0, 90, 180 et 270 degrés, de façon à amener la cellule à fournir un motif dense de points sur lesdits miroirs, lequel fournit des passages de lumière bien plus nombreux qu'une cellule de Herriott classique.

2. Cellule optique selon la revendication 1, comprenant de plus un support de rotation pour l'un desdits miroirs, permettant une rotation desdits axes l'un par rapport à l'autre.

3.  Cellule optique selon la revendication 1 ou 2, dans laquelle un certain nombre de passages de lumière entre les deux miroirs existent pour la lumière entrant dans ledit trou et sortant dudit trou pour toute combinaison donnée de distance de séparation de miroirs et d'angle d'intersection desdits axes.

4.  Cellule optique selon l'une quelconque des revendications 1-3, dans laquelle des tolérances de fabrication concernant lesdites longueurs focales sont compensées par variation de la distance de séparation de miroirs.

5.  Procédé pour cellule optique à multiples passages, comprenant les étapes de :

    - disposition d'une paire de miroirs cylindriques opposés, les miroirs ayant des longueurs focales sensiblement égales ;
    - positionnement d'un trou d'entrée dans l'un des miroirs pour introduire de la lumière dans la cellule et le trou d'entrée étant également un trou de sortie pour extraire de la lumière de la cellule, le trou définissant respectivement un agencement rentrant ;
    - introduction de lumière dans la cellule à travers le trou ;
    - extraction de lumière de la cellule à travers le trou ; et
    - positionnement des axes des miroirs se croisant à des angles autres que l'un quelconque parmi approximativement 0, 90, 180 et 270 degrés, de façon à fournir un motif dense de points sur les miroirs pour fournir des passages de lumière bien plus nombreux qu'une cellule de Herriott classique.

6.  Procédé selon la revendication 5, comprenant de plus l'étape de disposition d'un support de rotation pour l'un des miroirs, permettant une rotation des axes l'un par rapport à l'autre.

7.  Procédé selon la revendication 5 ou 6, dans lequel un certain nombre de passages de lumière entre les deux miroirs existent pour la lumière entrant dans ledit trou et sortant dudit trou pour toute combinaison donnée de distance de séparation de miroirs et d'angle d'intersection des axes.

8.  Procédé selon l'une quelconque des revendications 5-7, dans lequel des tolérances de fabrication concernant lesdites longueurs focales sont compensées par variation de la distance de séparation de miroirs.

**FIG. 1**

EP 1 621 867 B1

FIG. 2 (PRIOR ART)

**FIG. 3** (PRIOR ART)

**FIG. 4**

EP 1 621 867 B1

**FIG. 5**

FIG. 6

d = 0.88 f

6

12

FIG. 7

EP 1 621 867 B1

9°

12

6

4

d = 0.88 *f*

8

2

**FIG. 8**

EP 1 621 867 B1

REPLACEMENT DRAWING

FIG. 9

FIG. 10

Fig. 11

Fig. 12 (PRIOR ART)

**Fig. 13** (PRIOR ART)

**Fig. 14**

**Fig. 15**

Fig. 16

Fig. 17

EP 1 621 867 B1

N = 166

Input

Y

Z

X

2

4

6

**Fig. 18**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5291265 A

### Non-patent literature cited in the description

- **White, J. U.** Long Optical Paths of Large Aperture. *J. Opt. Soc. Am.,* May 1942, vol. 32, 285-288
- **Altmann, J. R. et al.** Two-mirror multipass absorption cell. *Appl. Opt,* 15 March 1981, vol. 20 (6), 995-999
- **Herriott, D. R. et al.** Folded Optical Delay Lines. *Appl. Opt.,* August 1965, vol. 4 (8), 883-889
- **Trutna, W. R. et al.** Multiple-pass Raman gain cell. *Appl. Opt.,* 15 January 1980, vol. 19 (2), 301-312
- **Herriott, D. H. et al.** Off-Axis Paths in Spherical Mirror Interferometers. *Appl. Opt.,* April 1964, vol. 3 (4), 523-526
- **Sigrist M.W. et al.** Laser spectroscopic sensing of air pollutants. *Proc. SPIE,* 2000, vol. 4063, 17
- The Propagation of Rays and Spherical Waves. **Yariv, A.** Introduction to Optical Electronics. Holt, Reinhart, and Winston, Inc, 1971, 18-29
- **Salour, M. M.** Multipass optical cavities for laser spectroscopy. *Laser Focus.,* October 1977, 50-55
- **Abdullin, R. M. et al.** Use of an integrating sphere as a multiple pass optical cell. *Sov. J. Opt. Technol.,* March 1988, vol. 55 (3), 139-141
- The Propagation of Rays and Spherical Waves. **Yariv, A.** Introduction to Optical Electronics. Holt, Reinhart, and Winston, Inc, 1971

- **Herriott, D. H. et al.** Off-Axis Paths in Spherical Mirror Interferometers. *Appl. Opt,* April 1964, vol. 3 (4), 523-526
- **McManus, J. B. et al.** Narrow optical interference fringes for certain setup conditions in multipass absorption cells of the Herriott type. *Appl. Opt.,* 01 March 1990, vol. 29 (7), 898-900
- **Herriott, D. R. ; Schulte, H. J.** Folded Optical Delay Lines. *Appl. Opt.,* August 1965, vol. 4 (8), 883-889
- **McManus et al.** Astigmatic mirror multipass absorption cells for long-path-length spectroscopy. *Appl. Opt,* 20 June 1995, vol. 34 (18), 3336-3348
- **Hao, L.-Y.** Cylindrical mirror multipass Lissajous system for laser photoacoustic spectroscopy. *Rev. Sci. Instrum.,* May 2002, vol. 73 (5), 2079-2085
- **McManus, J. B. ; Kebabian, P.L.** Narrow optical interference fringes for certain setup conditions in multipass absorption cells of the Herriott type. *Appl. Opt.,* 01 March 1990, vol. 29 (7), 898-900
- **Herriott, D. R. ; Schulte, H. J.** Folded Optical Delay Lines. *Appl. Opt,* August 1965, vol. 4 (8), 883-889
- **McManus, J. B. ; Kebabian, P.L.** Narrow optical interference fringes for certain setup conditions in multipass absorption cells of the Herriott type. *Appl. Opt,* 01 March 1990, vol. 29 (7), 898-900